# EUROPEAN PATENT APPLICATION

(11) **EP 4 800 348 A1**
(43) Date of publication of application: **02.09.2026**
(21) Application number: 24881989.8
(22) Date of filing: 06.08.2024
(51) Int. Cl.: G01B 9/02055

(54) **RANGING DEVICE**

(30) Priority: 26.10.2023 JP 2023184003
(71) Applicant: Panasonic Intellectual Property Management Co., Ltd., Kadoma-shi, Osaka 571-0057 (JP)
(72) Inventor: KIYOHARA Takayuki, Kadoma-shi, Osaka 571-0057 (JP); NOZAWA Katsuya, Kadoma-shi, Osaka 571-0057 (JP); INADA Yasuhisa, Kadoma-shi, Osaka 571-0057 (JP)
(74) Representative: Grünecker Patent- und Rechtsanwälte PartG mbB
(86) International application number: PCT/JP2024/028030
(87) International publication number: WO 2025/088872

(57) **Abstract**

A distance measuring device includes a light source module that emits a first laser beam and a reference laser beam, a referential interference system that detects a first interfering beam produced by subjecting the first laser beam to interference and a second interfering beam produced by subjecting the reference laser beam to interference and outputs a first signal, a measurative interference system that receives a first reflected beam produced by the first laser beam being reflected by a physical object and outputs a second signal, and a signal processing system that generates wavelength information pertaining to a wavelength of the first laser beam on the basis of the first signal and calculates a distance from the distance measuring device to the physical object on the basis of the wavelength information and the second signal. In the referential interference system, an optical path of the first laser beam and an optical path of the reference laser beam are arranged so that the first laser beam and the reference laser beam do not interfere with each other.

## Description

### Technical Field

The present disclosure relates to a distance measuring device.

### Background Art

Optical interferometry involving the use of a laser beam has been widely applied as a technique that makes it possible to acquire information indicating the distance to and/or the shape of an object or other information in a non-contact manner. For example, a frequency modulated continuous wave radar (FMCW) type of LiDAR (light detection and ranging) has been known as a three-dimensional measuring device of millimeter accuracy. Further, optical interferometry involving the use of optical coherence tomography (OCT) or optical comb has been known as a technique that makes it possible to perform a measurement with micrometer accuracy. These techniques have been widely utilized in the field of medicine and/or the field of industry.

Further, controlling a light interference phenomenon with a higher degree of accuracy makes it possible to perform a measurement of nanometer accuracy. For example, a measurement performed by a Michelson interference system using a single-wavelength laser is one method for measuring a difference in distance of the order of nanometers.

Optical measurement of nanometer accuracy typified by homodyne optical interferometry makes it possible to perform a high-accuracy measurement in a non-contact manner but undesirably limits a length measurement range to half of wavelength (on the order of submicrometers). For this reason, there is a case where it is difficult to measure a sample having both a structure of the order of nanometers and a structure of the order of several tens of micrometers.

As a method for addressing this problem, multiple-wavelength interferometry, which is optical interferometry involving the use of two or more single-wavelength laser beams, is expected. Multiple-wavelength interferometry makes it possible to resolve a conventional problem, i.e. a trade-off between a length measurement range and length measurement accuracy, and attain a long length measurement range and high measurement accuracy at the same time.

For example, PTL 1 and PTL 2 state that combining results of light interference of laser beams of different wavelengths makes it possible to resolve the conventional problem, i.e. the trade-off between a length measurement range and length measurement accuracy, and attain a long length measurement range and high measurement accuracy.

### Citation List

### Patent Literature

PTL 1: Japanese Unexamined Patent Application Publication No. 2021-148634
PTL 2: International Publication No. 2008/146480
PTL 3: Japanese Unexamined Utility Model Registration Application Publication No. 5-14867

### Summary of Invention

### Technical Problem

In a distance measuring method involving the use of interference of laser beams, distance information to be calculated is affected by temporal fluctuations in the wavelengths of the laser beams. Specifically, there occur deterioration in length measurement accuracy and deterioration in stability of a length measurement result due to a prolonged measurement.

To address this problem, the present disclosure provides a distance measuring device that can reduce deterioration in length measurement accuracy and long-term stability.

### Solution to Problem

A distance measuring device according to an aspect of the present disclosure includes a light source module that emits a first laser beam and a reference laser beam, a referential interference system that detects a first interfering beam produced by subjecting the first laser beam to interference and a second interfering beam produced by subjecting the reference laser beam to interference and outputs a first signal, a measurative interference system that receives a first reflected beam produced by the first laser beam being reflected by a physical object and outputs a second signal, and a signal processing system that generates wavelength information pertaining to a wavelength of the first laser beam on the basis of the first signal and calculates a distance from the distance measuring device to the physical object on the basis of the wavelength information and the second signal. In the referential interference system, an optical path of the first laser beam and an optical path of the reference laser beam are arranged so that the first laser beam and the reference laser beam do not interfere with each other.

### Advantageous Effects of Invention

The present disclosure makes it possible to reduce deterioration in length measurement accuracy and long-term stability.

### Brief Description of Drawings

[Fig. 1] Fig. 1 is a block diagram showing a configuration of a distance measuring device according to Embodiment 1.
[Fig. 2] Fig. 2 is a block diagram showing a configuration of a light source module of the distance measuring device according to Embodiment 1.
[Fig. 3] Fig. 3 is a diagram showing a specific configuration of a measurative interference system of the distance measuring device according to Embodiment 1.
[Fig. 4] Fig. 4 is a diagram showing a specific configuration of a referential interference system of the distance measuring device according to Embodiment 1.
[Fig. 5] Fig. 5 is a diagram for explaining the principle of a first measurement by the distance measuring device according to Embodiment 1 using a single-wavelength laser beam.
[Fig. 6] Fig. 6 is a diagram for explaining the principle of a second measurement by the distance measuring device according to Embodiment 1 using a plurality of single-wavelength laser beams.
[Fig. 7] Fig. 7 is a diagram showing length measurement ranges and length measurement accuracies of the two measurements by the distance measuring device according to Embodiment 1.
[Fig. 8] Fig. 8 is a diagram for explaining the stability of the wavelength and frequency of a single-wavelength laser beam.
[Fig. 9] Fig. 9 is a flow chart showing operation of the distance measuring device according to Embodiment 1.
[Fig. 10] Fig. 10 is a diagram showing a relationship between the frequency of updating of wavelength information and the frequency of calculation of distance.
[Fig. 11] Fig. 11 is a block diagram showing a configuration of a distance measuring device according to Embodiment 2.
[Fig. 12] Fig. 12 is a flow chart showing operation of the distance measuring device according to Embodiment 2.
[Fig. 13] Fig. 13 is a block diagram showing a configuration of a distance measuring device according to Embodiment 3.
[Fig. 14] Fig. 14 is a block diagram showing a configuration of a light source module of a distance measuring device according to Modification 1.
[Fig. 15] Fig. 15 is a block diagram showing a configuration of a distance measuring device according to Modification 2.

### Description of Embodiments

### (Brief Overview of the Present Disclosure)

First, the following shows the definitions of main terms used herein.

The term "length measurement accuracy" means a degree of accuracy with which to measure distance. That is, the length measurement accuracy is a measure of determination as to whether how accurately distance information is obtained. For this reason, it can be said that the higher the length measurement accuracy is, the more accurately a measurement is being performed.

The term "length measurement range" means a range of distance directions within which unique distance information can be acquired. That is, the length measurement range means a range within which distance measurement (ranging) is possible.

The length measurement accuracy and the length measurement range are herein both expressed in the same dimension as distance. Specifically, a unit of the length measurement accuracy and a unit of the length measurement range are both expressed, for example, by nanometers (nm), micrometers (µm), and millimeters (mm). For this reason, "high length measurement accuracy" is synonymous with "short length measurement accuracy" expressed in the distance dimension. "Low length measurement accuracy" is synonymous with "long length measurement accuracy" expressed in the distance dimension. Further, the length measurement accuracy is herein sometimes referred to simply as "accuracy". The length measurement range is sometimes referred to simply as "range".

A distance measurement within a length measurement range is called "absolute distance measurement". For example, a distance measurement in a length measurement range of 1 mm with an accuracy of 10 nm is an absolute distance measurement by which a difference of 10 nm is recognized within a range of 1 mm.

The term "long-term stability" means that a length measurement can be performed with constant accuracy with sufficiently less temporal variations during a period from the start of the measurement to the end of the measurement. A temporal fluctuation in the wavelength of a laser beam leads to deterioration in long-term stability. Deterioration in long-term stability can cause problems such as length measurement time restrictions.

The following encapsulates a plurality of aspects of a distance measuring device according to the present disclosure.

A distance measuring device according to a first aspect of the present disclosure includes a light source module that emits a first laser beam and a reference laser beam, a referential interference system that detects a first interfering beam produced by subjecting the first laser beam to interference and a second interfering beam produced by subjecting the reference laser beam to interference and outputs a first signal, a measurative interference system that receives a first reflected beam produced by the first laser beam being reflected by a physical object and outputs a second signal, and a signal processing system that generates wavelength information pertaining to a wavelength of the first laser beam on the basis of the first signal and calculates a distance from the distance measuring device to the physical object on the basis of the wavelength information and the second signal. In the referential interference system, an optical path of the first laser beam and an optical path of the reference laser beam are arranged so that the first laser beam and the reference laser beam do not interfere with each other.

This makes it possible to, even if the wavelength of a laser beam fluctuates, obtain from the wavelength information the value of the actual wavelength of a laser beam used for a measurement or a value equivalent thereto. The fluctuation in the wavelength can be fed back to the calculation of the distance, and deterioration in length measurement and long-term stability can be reduced.

A distance measuring device according to a second aspect of the present disclosure may be directed to the distance measuring device according to the first aspect, wherein the light source module may further emit a second laser beam that is different in wavelength from the first laser beam, and the measurative interference system may further receive a second reflected beam produced by the second laser beam being reflected by the physical object.

This makes it possible to perform ranging involving the use of multi-wavelength interferometry (MWI) involving the use of beams of a plurality of wavelengths. This makes it possible to achieve high length measurement accuracy and a large length measurement range.

The referential interference system may detect an interfering beam produced by subjecting the second laser beam to interference and an interfering beam produced by subjecting the reference laser beam to interference and output a third signal, and the signal processing system may generate second wavelength information pertaining to a wavelength of the second laser beam on the basis of the third signal and calculate a distance from the distance measuring device to the physical object on the basis of the second wavelength information, the second signal, and first wavelength information that is wavelength information pertaining to a wavelength of the first laser beam.

It is not essential to generate the second wavelength information in a case where the second laser beam is used. For example, in a case where a fluctuation in the wavelength of the first laser beam is smaller than a fluctuation in the wavelength of the second laser beam, high length measurement accuracy can be secured on the basis of a result of interference of the first laser beam. For this reason, even in a case where the second wavelength information pertaining to the wavelength of the second laser beam is not obtained, high length measurement accuracy and a large length measurement range can be achieved.

A distance measuring device according to a third aspect of the present disclosure may be directed to the distance measuring device according to the second aspect, wherein a wavelength of the reference laser beam may be shorter than a wavelength of the first laser beam.

This makes it possible to measure the respective wavelengths of a plurality of laser beams that are used for MWI, thus making it possible to increase the length measurement accuracy even if the length measurement range is extended.

A distance measuring device according to a fourth aspect of the present disclosure may be directed to the distance measuring device according to the second or third aspect, wherein the measurative interference system may include a first light interference system that subjects the first laser beam and the first reflected beam to interference with each other and emits a third interfering beam produced by an interference of the first laser beam and the first reflected beam and that subjects the second laser beam and the second reflected beam to interference with each other and emits a fourth interfering beam produced by an interference of the second laser beam and the second reflected beam and a first photodetection system that detects the third interfering beam and the fourth interfering beam and outputs the second signal.

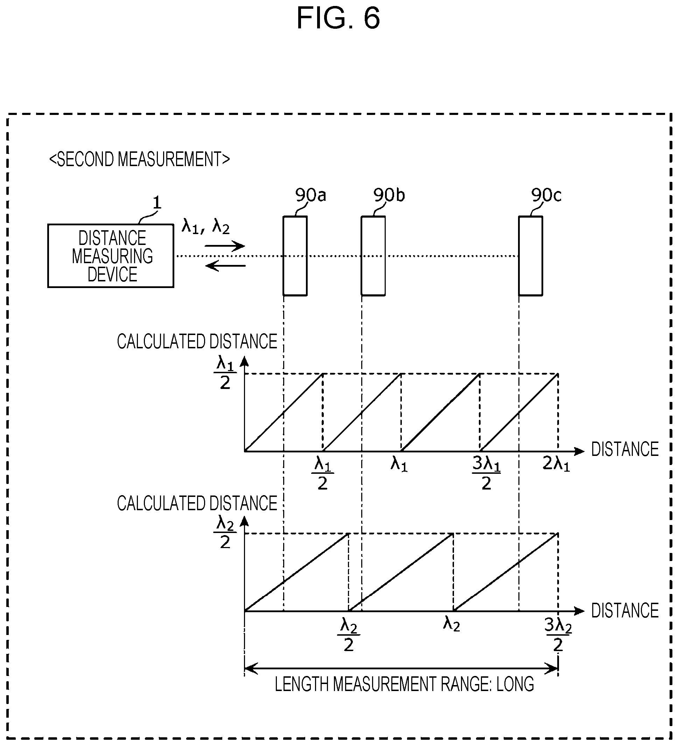

This makes it possible to subject beams to homodyne interference for each separate wavelength and obtain interfering signals of each separate wavelength as the second signal with a high degree of accuracy. Combining the interfering signals of each separate wavelength makes it possible to enlarge the length measurement range. Details will be described later with reference to Fig. 6.

The technology described in PTL 1 detects a beat signal with a photodetector by subjecting a measurative laser beam and a reference laser beam to heterodyne interference and, on the basis of the result, corrects a result of measuring the length with the measurative laser beam. Since it is necessary to reduce the wavelength difference between two laser beams as a condition for heterodyne interference, a choice of wavelengths of the measurative laser beam is limited by the reference laser beam.

A commonly used example of a wavelength-stabilized laser is a HeNe laser. However, in the case of heterodyne interference, the wavelength of a measurative laser beam is limited to a wavelength near 633 nm, which is the wavelength of a HeNe laser beam. An optical element suited to a wavelength near 633 nm is expensive and makes a measurement difficult in a case where the physical object is an AR-coated photochromic lens. Further, since MWI involves the use of a plurality of lasers of different wavelengths as measurative laser beams, it is necessary to prepare as many reference laser beam light sources. On the other hand, the distance measuring device according to the present aspect, in which homodyne interference is used, can increase the wavelength selectivity of two laser beams that are used for a measurement, as the absolute value of the difference between the wavelengths of the two laser beams may be greater than in a case where heterodyne interference is used. For example, being able to select a wavelength suited to the measurement of the physical object results in being able to reduce deterioration in length measurement accuracy and long-term stability of the physical object. Further, it is only necessary to prepare only one reference laser beam light source regardless of the number of wavelengths of measurative laser beams. This makes it possible to achieve a simplified, small-sized, and low-cost configuration of the distance measuring device. Furthermore, being able to use a more stable single-wavelength laser typified by a HeNe laser makes wavelength measurement accuracy high with respect to another method, resulting in making length measurement accuracy and long-term stability high with respect to another method.

A distance measuring device according to a fifth aspect of the present disclosure may be directed to the distance measuring device according to the first aspect, wherein the light source module may further emit a plurality of second laser beams, the plurality of second laser beams may be different in wavelength from each other, a wavelength of each of the plurality of second laser beams may be different from a wavelength of the first laser beam, and the measurative interference system may further receive a plurality of second reflected beams produced by the plurality of second laser beams being reflected by the physical object.

This makes it possible to use laser beams of three or more wavelengths for a measurement. This makes it possible to further extend the length measurement range.

A distance measuring device according to a sixth aspect of the present disclosure may be directed to the distance measuring device according to any one of the first to fifth aspects, further including an optical brancher that divides the first laser beam emitted from the light source module into a first portion and a second portion, causes the first portion to be incident on the referential interference system, and causes the second portion to be incident on the measurative interference system.

This makes it possible, with a simple configuration, to cause part of the first laser beam, which is used for a measurement, to be inputted to the referential interference system.

A distance measuring device according to a seventh aspect of the present disclosure may be directed to the distance measuring device according to any one of the first to sixth aspects, wherein the referential interference system may include a second light interference system that subjects the first laser beam to interference and emits the first interfering beam produced by an interference of the first laser beam and that subjects the reference laser beam to interference and emits the second interfering beam produced by an interference of the reference laser beam and a second photodetection system that detects the first interfering beam and the second interfering beam and outputs the first signal.

This makes it possible to subject beams to homodyne interference for each separate wavelength and obtain an interfering signal of the first laser beam and an interfering signal of the reference laser beam as the first signal with a high degree of accuracy. This makes it possible to increase the accuracy of calculation of a wavelength based on the first signal. The wavelength selectivity of two laser beams that are used for a measurement can be increased, as the absolute value of the difference between the wavelengths of the two laser beams may be greater than in a case where heterodyne interference is used. For example, being able to select a wavelength suited to the measurement of the physical object results in being able to reduce deterioration in length measurement accuracy and long-term stability of the physical object. Further, since it is only necessary to prepare only one reference laser beam light source regardless of the number of wavelengths of measurative laser beams, a simplified, small-sized, and low-cost configuration of the distance measuring device can be achieved. Furthermore, being able to use a more stable single-wavelength laser typified by a HeNe laser makes wavelength measurement accuracy high with respect to another method, resulting in making length measurement accuracy and long-term stability high with respect to another method.

A distance measuring device according to an eighth aspect of the present disclosure may be directed to the distance measuring device according to the seventh aspect, wherein the referential interference system may further include an optical path difference changing mechanism that changes a difference between an optical path length of the first laser beam passing through the second light interference system and an optical path length of the reference laser beam passing through the second light interference system.

This makes it possible to effect changes in intensity of interfering signals of the first laser beam and the reference laser beam by adjusting the optical path difference. This makes it possible to calculate the wavelength of the first laser beam on the basis of the changes in intensity of the interfering signals with a high degree of accuracy. It is not essential to change the difference in optical path length. It is possible to monitor the interfering signal of the first laser beam and the interfering signal of the reference laser beam without changing the difference in optical path length.

By using the interfering signals, spectrum information of the first laser beam and the reference laser beam are calculated. Assuming that the spectrum intensities of the first laser beam and the reference laser beam have Gaussian characteristics, a wavelength needed for the computation of a length measurement is the peak wavelength of each laser beam.

To address this problem, a distance measuring device according to a ninth aspect of the present disclosure may be directed to the distance measuring device according to any one of the first to eighth aspects, wherein the signal processing system may calculate a peak wavelength of the first laser beam on the basis of the first signal and may generate the wavelength information indicating the peak wavelength.

This makes it unnecessary to obtain the spectrum of a laser beam, thus making it possible to reduce the complication of elements and arithmetic computations needed for photodetection. This makes it possible to achieve, for example, reductions in size and weight of the distance measuring device due to simplification of an element configuration and a reduction in computational power consumption due to a reduction in computational throughput.

A distance measuring device according to a tenth aspect of the present disclosure may be directed to the distance measuring device according to any one of the second to fourth aspects, wherein the signal processing system may calculate a peak wavelength of the first laser beam and a peak wavelength of the second laser beam on the basis of the first signal and may generate the wavelength information indicating the peak wavelength of the first laser beam and the peak wavelength of the second laser beam.

This makes it possible to calculate the distance by using not only the wavelength of the first laser beam but also the wavelength of the second laser beam used for an actual measurement or a value equivalent thereto, thus making it possible to increase the length measurement accuracy also in the case of MWI.

A distance measuring device according to an eleventh aspect of the present disclosure may be directed to the distance measuring device according to any one of the first to tenth aspects, wherein the signal processing system may update the wavelength information in a case where a predetermined condition is satisfied.

This makes it possible to update the wavelength information at an appropriate timing. Inhibiting the wavelength information from being unnecessarily updated makes it possible to reduce, for example, computation cost required to update the wavelength information, i.e. computation time and/or power consumption required for computation.

A distance measuring device according to a twelfth aspect of the present disclosure may be directed to the distance measuring device according to any one of the first to eleventh aspects, wherein the signal processing system may include a memory for storing the wavelength information thus generated, a frequency at which the signal processing system generates the wavelength information may be lower than a frequency at which the signal processing system calculates the distance, and the signal processing system may calculate the distance on the basis of the wavelength information stored in the memory and the second signal.

This makes it possible, for example, to reduce the frequency of generation of the wavelength information in a case where a drift, i.e. a long-term fluctuation in wavelength, slowly progresses. Further, computation cost required to generate the wavelength information is generally higher than computation cost required for a length measurement. Reducing the frequency of generation of the wavelength information makes it possible to reduce computation cost.

A distance measuring device according to a thirteenth aspect of the present disclosure may be directed to the distance measuring device according to the twelfth aspect, wherein in a case where a fluctuation in the wavelength of the first laser beam exceeds a threshold, the signal processing system may generate the wavelength information and update the wavelength information stored in the memory.

This makes it possible to reduce the frequency of generation of the wavelength information, thus making it possible to reduce power consumption required to generate the wavelength information. For example, the wavelength information can be updated in a case where such a fluctuation in wavelength occurs as to affect a result of calculation of the distance. That is, the wavelength information can be updated at an effective and efficient timing.

A distance measuring device according to a fourteenth aspect of the present disclosure may be directed to the distance measuring device according to any one of the first to thirteenth aspects, wherein the light source module may include an adjuster that adjusts the wavelength of the first laser beam on the basis of the wavelength information.

This makes it possible, for example, to bring a fluctuating wavelength back to its original value, thus making it possible to increase the length measurement accuracy.

A distance measuring device according to a fifteenth aspect of the present disclosure may be directed to the distance measuring device according to any one of the first to fourteenth aspects, wherein the first laser beam may be a laser beam including a plurality of single modes.

This makes it possible to use a laser beam other than a single-wavelength laser beam.

A distance measuring device according to a sixteenth aspect of the present disclosure may be directed to the distance measuring device according to any one of the first to fifteenth aspects, wherein the referential interference system and the measurative interference system may share a light interference system.

This makes it possible to achieve reductions in size and weight of the distance measuring device.

A distance measuring device according to a seventeenth aspect of the present disclosure may be directed to the distance measuring device according to the first aspect, wherein the measurative interference system may further receive a third reflected beam produced by the reference laser beam being reflected by the physical object.

This makes it possible to reduce the number of laser light sources, thus making it possible to achieve reductions in size and weight of the distance measuring device.

The following describes an embodiment in concrete terms with reference to the drawings.

It should be noted that the embodiments to be described below each illustrate a comprehensive and specific example. The numerical values, shapes, materials, constituent elements, placement and topology of constituent elements, steps, orders of steps, or other features that are shown in the following embodiments are just a few examples and are not intended to limit the present disclosure. Further, those of the constituent elements in the following embodiments which are not recited in an independent claim are described as optional constituent elements.

Further, the drawings are schematic views and are not necessarily strict illustrations. Accordingly, for example, the drawings are not necessarily to scale. Further, in the drawings, substantially the same components are given the same reference signs, and a repeated description may be omitted or simplified.

Further, terms such as "parallel" or "perpendicular" used herein to describe interelement relationships, terms used herein to describe the shapes of elements, and ranges of numerical values used herein are not expressions that represent only exact meanings but expressions that are meant to also encompass substantially equivalent ranges, e.g. differences of approximately several percent.

Further, unless otherwise noted, ordinal numbers such as "first" and "second" herein do not mean the number or order of constituent elements but are used for the purpose of avoiding confusion of constituent elements of the same kind and distinguishing between them.

### (Embodiment 1)

### [1. Configuration of Distance Measuring Device]

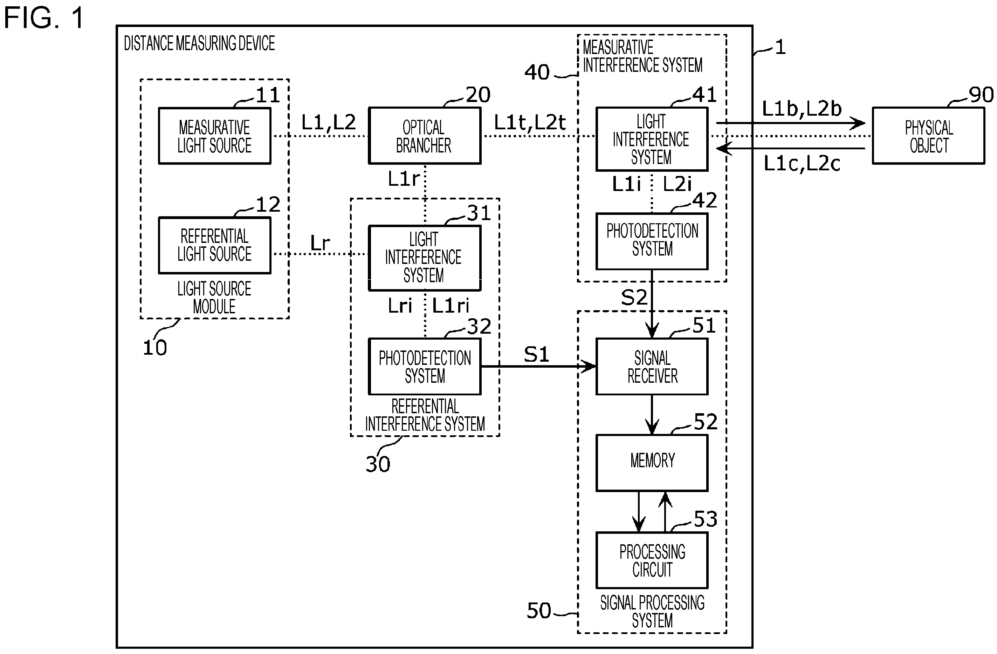

First, a configuration of a distance measuring device according to Embodiment 1 is described with reference to Fig. 1. Fig. 1 is a block diagram showing a configuration of a distance measuring device 1 according to the present embodiment.

The distance measuring device 1 shown in Fig. 1 is a device that measures the distance to a physical object 90. For example, by measuring the distance to each site of the physical object 90, the distance measuring device 1 can obtain information indicating the surface shape of the physical object 90. For this reason, for example, the distance measuring device 1 can be used for visual inspections or other inspections of products or other articles.

As shown in Fig. 1, the distance measuring device 1 includes a light source module 10, an optical brancher 20, a referential interference system 30, a measurative interference system 40, and a signal processing system 50. Further, although not illustrated, the distance measuring device 1 may include a supporter that supports the physical object 90. The supporter may include, for example, a driver such as a motor or a piezoelectric element and be able to change the attitude and/or position of the physical object 90.

In Fig. 1, a dotted line connecting two blocks of the distance measuring device 1 with each other represents a path of light. Further, a solid arrow connecting two blocks of the distance measuring device 1 with each other represents a path of transmission of a primary signal and a direction of transmission of the signal.

The light source module 10 emits a plurality of laser beams. In the present embodiment, the plurality of laser beams are single-wavelength laser beams of different peak wavelengths. Specifically, the light source module 10 emits a first laser beam, a second laser beam, and a reference laser beam. As shown in Fig. 1, the light source module 10 includes a measurative light source 11 and a referential light source 12.

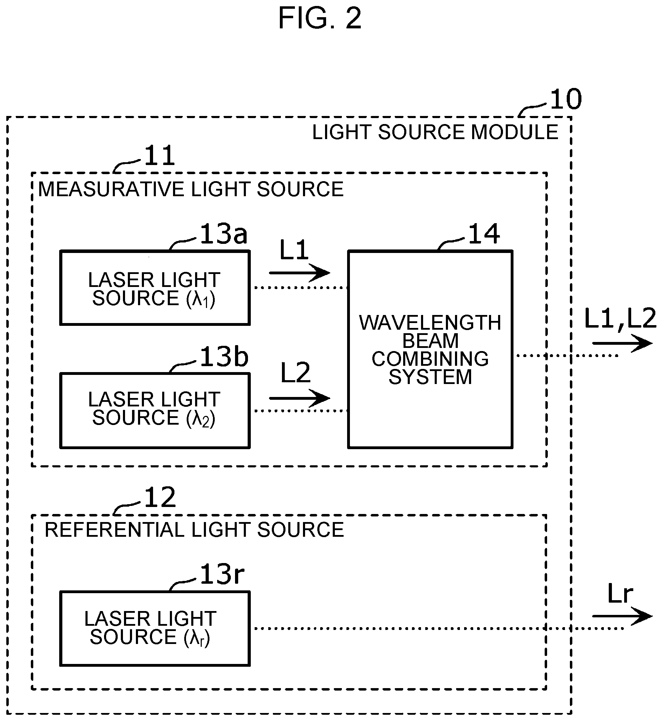

The measurative light source 11 emits a laser beam L1, which is an example of the first laser beam. Further, the measurative light source 11 emits a laser beam L2, which is an example of the second laser beam. The referential light source 12 emits a reference laser beam Lr. A more specific configuration of the light source module 10 will be described later with reference to Fig. 2.

In general, a laser beam is difficult to keep at a constant wavelength and a constant frequency, and to some degree, is subject to temporal variations in wavelength and frequency. A fluctuation in wavelength is a parameter that indicates an amount of temporal variation in wavelength. A fluctuation in wavelength includes not only a short-term variation but also a long-term drift. The term "drift" means that the average of short-term variations shift with passage of time. In the present embodiment, a fluctuation in the wavelength of the reference laser beam Lr is smaller than fluctuations in the wavelengths of the laser beams L1 and L2. Details of a fluctuation in wavelength will be described later.

The optical brancher 20 divides the laser beam L1 emitted from the light source module 10 into a beam L1r and a beam L1t and emits the beam L1r and the beam L1t. The beam L1r is inputted to the referential interference system 30, and the beam L1t is inputted to the measurative interference system 40. Further, the optical brancher 20 does not divide the laser beam L2 and emits it as a beam L2t. Alternatively, the optical brancher 20 may divide the laser beam L2 into two beams. One of the two beams thus divided is inputted to the referential interference system 30, and the other beam, namely the beam L2t, is inputted to the measurative interference system 40.

The optical brancher 20 divides an incoming beam into beams by intensity and emits them in different directions. The optical brancher 20 is, for example, a semitransparent mirror, and has an intensity division ratio of, for example, 1:1, although this does not impose any limitation. The intensity of the beam L1r may be higher than the intensity of the beam L1t, and the intensity of the beam L1t may be higher than the intensity of the beam L1r. There is no change in wavelength of light during division of the light by the optical brancher 20.

The referential interference system 30 detects a beam subjected to interference with the first laser beam and a beam subjected to interference with the reference laser beam and outputs a first signal S1 corresponding to a result of detection of the beams subjected to interference. Specifically, the referential interference system 30 receives the beam L1r emitted from the optical brancher 20 and the reference laser beam Lr from the referential light source 12. As shown in Fig. 1, the referential interference system 30 includes a light interference system 31 and a photodetection system 32.

The light interference system 31 is an example of a second light interference system, emits an interference beam L1ri by subjecting the beam L1r to interference, and emits an interfering beam Lri by subjecting the reference laser beam Lr to interference. The interfering beam L1ri is an example of a first interfering beam, and the interfering beam Lri is an example of a second interfering beam. Interference by the light interference system 31 is homodyne interference.

The photodetection system 32 is an example of a second photodetection system, detects the interfering beams L1ri and Lri, and outputs the first signal S1. The first signal S1 is outputted to the signal processing system 50. The first signal S1 is used for calculating the wavelength of the beam L1r, i.e. the wavelength of the beam L1t.

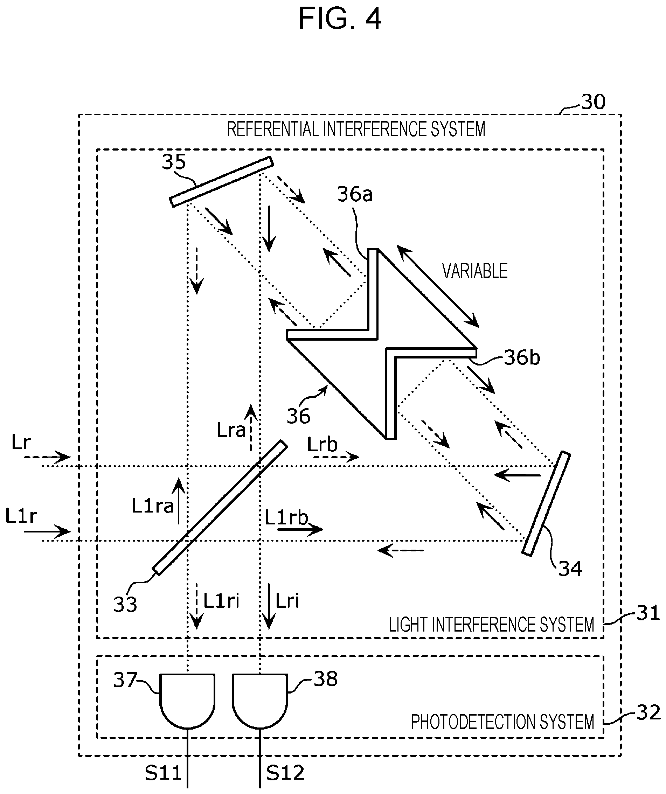

Specific configurations of the light interference system 31 and the photodetection system 32 will be described later with reference to Fig. 4.

The measurative interference system 40 receives a first reflected beam produced by reflection by the physical object 90 of a portion of the first laser beam shone on the physical object 90 and outputs a second signal S2. Further, the measurative interference system 40 receives a second reflected beam produced by reflection by the physical object 90 of a portion of the second laser beam shone on the physical object 90. Specifically, the measurative interference system 40 receives the beam L1t emitted from the optical brancher 20 and a reflected beam L1c from the physical object 90. Furthermore, the measurative interference system 40 receives the beam L2t emitted from the optical brancher 20 and a reflected beam L2c from the physical object 90. As shown in Fig. 1, the measurative interference system 40 includes a light interference system 41 and a photodetection system 42.

The light interference system 41 is an example of a first light interference system. The light interference system 41 subjects the beam L1t and the reflected light L1c to interference with each other and emits a third interfering beam L1i produced by the interference of the beam L1t and the reflected light L1c. The light interference system 41 subjects the beam L2t and the reflected light L2c to interference with each other and emits a fourth interfering beam L2i produced by the interference of the beam L2t and the reflected light L2c. Interference by the light interference system 41 is homodyne interference.

The photodetection system 42 is an example of a first photodetection system, detects the third interfering beam L1i and the fourth interfering beam L2i, and outputs a second signal S2 corresponding to a result of detection of the third interfering beam L1i and the fourth interfering beam L2i. The second signal S2 is outputted from the signal processing system 50. The second signal S2 is used to calculate the distance from the distance measuring device 1 to the physical object 90.

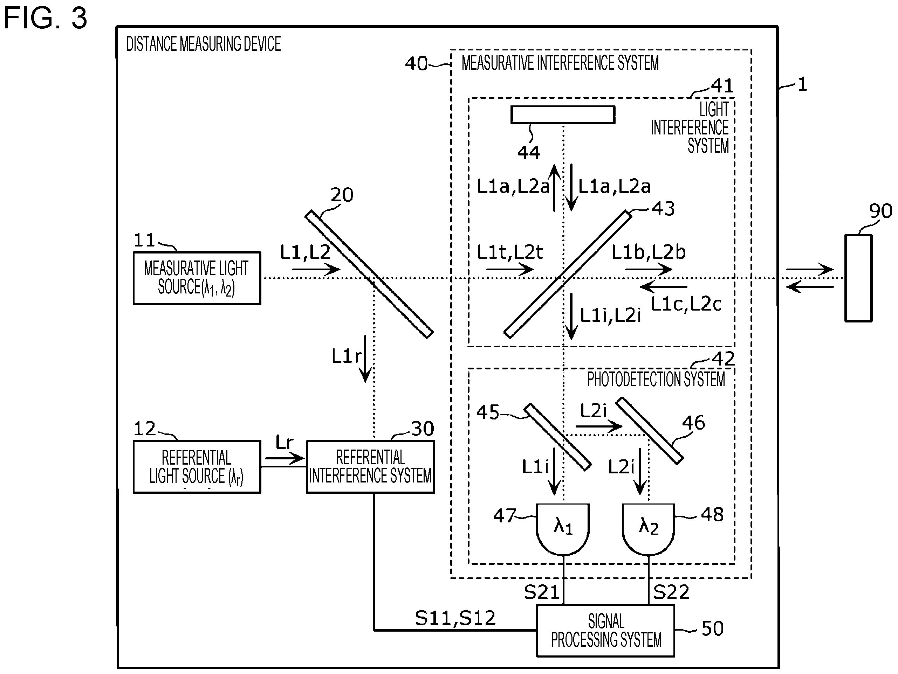

Specific configurations of the light interference system 41 and the photodetection system 42 will be described later with reference to Fig. 3.

The signal processing system 50 generates wavelength information pertaining to the wavelength of the first laser beam on the basis of the first signal S1 and calculates the distance from the distance measuring device 1 to the physical object 90 on the basis of the wavelength information and the second signal S2. As shown in Fig. 1, the signal processing system 50 includes a signal receiver 51, a memory 52, and a processing circuit 53.

The signal receiver 51 acquires the first signal S1 from the referential interference system 30 and acquires the second signal S2 from the measurative interference system 40. The signal receiver 51 stores, in the memory 52, the first and second signals S1 and S2 thus acquired.

The memory 52 is a storage device such as a nonvolatile memory and/or a volatile memory. In the memory 52, the first signal S1 and the second signal S2 are stored. Further, in the memory 52, programs and data for causing constituent elements of the distance measuring device 1 to operate and wavelength information, distance information, or other information obtained by signal processing may be stored.

The processing circuit 53 is a circuit that processes signals outputted from the referential interference system 30 and the measurative interference system 40. Specifically, the processing circuit 53 calculates the peak wavelength of the first laser beam on the basis of the first signal S1 and thereby generates wavelength information indicating the peak wavelength thus calculated. In the present embodiment, the processing circuit 53 calculates the peak wavelength λ₁ of the laser beam L1 and the peak wavelength λ₂ of the laser beam L2 on the basis of the first signal S1. The processing circuit 53 calculates the distance from the distance measuring device 1 to the physical object 90 on the basis of the wavelength information stored in the memory 52 and the second signal S2. For example, the processing circuit 53 acquires the position of the physical object 90 as phase information by processing, in accordance with a predetermined algorithm, the second signal S2 outputted from the measurative interference system 40. Representative usable examples of phase estimation algorithms include a 4-step phase-shifting algorithm. The processing circuit 53 can calculate the distance from the distance measuring device 1 to the physical object 90 on the basis of the phase information.

In the present embodiment, the processing circuit 53 calculates a first distance within a first length measurement range with a first length measurement accuracy on the basis of a result of interference corresponding to the wavelength λ₁. Further, the processing circuit 53 calculates a second distance within a second length measurement range with a second length measurement accuracy on the basis of results of interference corresponding to the wavelength λ₁ and the wavelength λ₂. The processing circuit 53 calculates the distance from the distance measuring device 1 to the physical object 90 on the basis of the first distance and the second distance. The processing circuit 53 calculates the absolute distance from the distance measuring device 1 to the physical object 90.

Note here that the first length measurement accuracy is higher than the second length measurement accuracy. Further, the second length measurement range is longer than the first length measurement range. For this reason, simply put, the processing circuit 53 calculates a distance within a short length measurement range with high length measurement accuracy on the basis of a result of interference of one wavelength. The processing circuit 53 calculates a distance within a long length measurement range with low length measurement accuracy on the basis of a result of interference of two wavelengths. A specific method for calculating a distance will be described later.

The processing circuit 53 is implemented as an integrated circuit such as an LSI (large-scale integration). For example, the processing circuit 53 may be implemented as a dedicated hardware configuration and may calculate the distance from the distance measuring device 1 to the physical object 90. Alternatively, the processing circuit 53 may include a processor and may calculate the distance from the distance measuring device 1 to the physical object 90 by causing the processor to execute a program stored in the memory 52. Alternatively, the processing circuit 53 may be a programmable FPGA (Field Programmable Gate Array) or a reconfigurable processor capable of a reconfiguration of connections and settings of circuit cells within an LSI.

### [1-1. Light Source Module]

The following describes a specific configuration of the light source module 10 with reference to Fig. 2. Fig. 2 is a block diagram showing a configuration of the light source module 10 of the distance measuring device 1 according to the present embodiment. As shown in Fig. 2, the measurative light source 11 includes laser light sources 13a and 13b and a wavelength beam combining system 14. The referential light source 12 includes a laser light source 13r.

The laser light source 13a emits the laser beam L1 of the wavelength λ₁. The laser beam L1 is an example of the first laser beam and, for example, is a single-wavelength laser beam. The wavelength λ₁ is the peak wavelength of the laser beam L1.

The laser light source 13b emits the laser beam L2 of the wavelength λ₂. The laser beam L2 is an example of the second laser beam and, for example, is a single-wavelength laser beam. The wavelength λ₂ is the peak wavelength of the laser beam L2 and is a wavelength that is different from the wavelength λ₁. The shorter the absolute value (|λ₁ -λ₂|) of the difference between the wavelength λ₁ and the wavelength λ₂ becomes, the longer the length measurement range can be made.

The laser light source 13r emits the reference laser beam Lr of the wavelength λr. The reference laser beam Lr is an example of the reference laser beam and, for example, is a single-wavelength laser beam. The wavelength λr is the peak wavelength of the reference laser beam Lr and is a wavelength that is different from both the wavelength λ₁ and the wavelength λ₂. The wavelength λr is shorter than the wavelength λ₁.

The laser light sources 13a and 13b are, for example, semiconductor laser elements. For example, as the laser light sources 13a and 13b, DFB (distributed feedback) laser light sources having high-wavelength-stability and high-frequency-stability features can be used. Further, the laser light source 13r is, for example, a HeNe laser light source. The wavelength of the reference laser beam Lr that the laser light source 13r emits is approximately 633 nm. The HeNe laser light source is a light source that is fewer in fluctuation in wavelength of emitted light, i.e. higher in wavelength time stability, than the semiconductor laser elements.

The wavelength beam combining system 14 combines the laser beams L1 and L2 emitted separately from each of the two laser light sources 13a and 13b. The wavelength beam combining system 14 is, for example, a DWDM (dense wavelength division multiplexing) element, a holographic optical element, or other elements.

### [1-2. Specific Configuration of Measurative Interference System]

The following describes a specific configuration of the measurative interference system 40. As mentioned above, the measurative interference system 40 includes the light interference system 41 and the photodetection system 42. The following describes these components in sequence with reference to Fig. 3. Fig. 3 is a diagram showing a specific configuration of the measurative interference system 40 of the distance measuring device 1 according to the present embodiment.

In the present embodiment, the light interference system 41 is an optical system that uses Michelson interference. As shown in Fig. 3, the light interference system 41 includes a beam splitter 43 and a mirror 44.

The beam splitter 43 is an optical element that divides an incoming beam into a plurality of beams by intensity and emits the plurality of beams in different directions. The beam splitter 43 is, for example, a semitransparent mirror and divides the incoming beam into a transmitted beam and a reflected beam so that the transmitted beam and the reflected beam have the same intensity. The intensity ratio of the transmitted beam to the reflected beam may not be 1:1.

Specifically, the beam splitter 43 divides, into two beams L1a and L1b, the beam L1t divided by the optical brancher 20 from the laser beam L1 from the light source module 10. Further, the beam splitter 43 divides, into two beams L2a and L2b, the beam L2t divided by the optical brancher 20 from the laser beam L2 from the light source module 10. In the example shown in Fig. 3, the beam L1a and the beam L2a are reflected beams reflected off the beam splitter 43 and are emitted toward the mirror 44. The beams L1b and L2b are transmitted beams transmitted through the beam splitter 43 and are emitted toward the physical object 90.

The mirror 44 is an example of an optical element that reflects the beams L1a and L2a from the beam splitter 43 and causes them to fall on the beam splitter 43. Specifically, the mirror 44 specularly reflects the incoming beams. The higher the reflectance is, the higher the detection accuracy can be made, as a loss of light is reduced. The beams L1a and L2a falling on the mirror 44 are both reflected by the mirror 44 and fall again on the beam splitter 43. At least part of each of the beams L1a and L2a reflected off the mirror 44 and falling again on the beam splitter 43 is transmitted through the beam splitter 43.

The beams L1b and L2b shone on the physical object 90 are reflected by the physical object 90 and fall again on the beam splitter 43 as the reflected beams L1c and L2c. At least part of each of the reflected beams L1c and L2c falling again on the beam splitter 43 is reflected by the beam splitter 43. It is in this case that there occurs interference of the reflected beams L1c and L2c and the beams L1a and L2a. In Fig. 3, an interfering beam produced by homodyne interference of the reflected beam L1c and the beam L1a is shown as the interfering beam L1i. An interfering beam produced by homodyne interference of the reflected beam L2c and the beam L2a is shown as the interfering beam L2i. The interfering beams L1i and L2i are emitted to the photodetection system 42.

The mirror 44 and the physical object 90 can swap positions with each other. That is, in a case where a beam from the light source module 10 is divided by the beam splitter 43 into a transmitted beam and a reflected beam, the transmitted beam may be shone on the mirror 44 and the reflected beam may be shone on the physical object 90.

Further, the light interference system 41 is not limited to an optical system that uses Michelson interference. The light interference system 41 may be an optical system that uses Fizeau interference, Mach-Zehnder interference, or other types of interference.

As shown in Fig. 3, the photodetection system 42 includes a dichroic mirror 45, a mirror 46, and photodetectors 47 and 48.

The dichroic mirror 45 is an example of a wavelength separation element that separates an incoming beam into a beam of the wavelength λ₁ and a beam of the wavelength λ₂. Specifically, the dichroic mirror 45 wavelength-separates a beam falling on the photodetection system 42 from the beam splitter 43. In the present embodiment, the dichroic mirror 45 causes the beam of the wavelength λ₁ to be emitted toward the photodetector 47 and causes the beam of the wavelength λ₂ to be emitted toward the photodetector 48. In the present embodiment, the mirror 46 is provided for optical path adjustment.

The mirror 46 specularly reflects the beam of the wavelength λ₂ separated by the dichroic mirror 45 and causes it to fall on the photodetector 48. The mirror 46 may not be provided, and the photodetector 48 may be placed in the position of the mirror 46. Alternatively, the mirror 46 may be provided for the purpose of adjusting the optical path of the beam of the wavelength λ₁.

The photodetectors 47 and 48 each include a photoelectric conversion element that generates an electric signal corresponding to the intensity of the incoming beam. The photodetector 47 has sensitivity to at least the wavelength λ₁ and, by photoelectrically converting the beam of the wavelength λ₁, outputs, as the second signal S2 to the signal processing system 50, an interfering signal S21 having a signal level corresponding to the intensity of the beam. The interfering signal S21 is a signal obtained by detecting the interfering beam L1i produced by the interference of part of the laser beam L1 and the reflected beam L1c from the physical object 90.

The photodetector 48 has sensitivity to at least the wavelength λ₂ and, by photoelectrically converting the beam of the wavelength λ₂, outputs, as the second signal S2 to the signal processing system 50, an interfering signal S22 having a signal level corresponding to the intensity of the beam. The interfering signal S22 is a signal obtained by detecting the interfering beam L2i produced by the interference of at least part of the laser beam L2 and the reflected beam L2c from the physical object 90.

The photodetection system 42 is not limited in configuration to the aforementioned example as long as it can receive light for each wavelength. For example, after a beam traveling from the beam splitter 43 toward the photodetection system 42 has been divided into two beams by intensity, each of the two beams thus divided may be passed through a filter having a transmission band to a particular wavelength component. As the filter, for example, a bandpass filter is used. Alternatively, the filter may be a lowpass filter, a high-pass filter, or other filters.

Further, the measurative interference system 40 may not be an optical system that uses homodyne interference. The measurative interference system 40 may be an optical system that uses heterodyne interference. In this case, the measurative interference system 40 may not include a dichroic mirror 45 that wavelength-divides a beam, and the number of photodetectors may be 1.

### [1-3. Specific Configuration of Referential Interference System]

The following describes a specific configuration of the referential interference system 30. As mentioned above, the referential interference system 30 includes the light interference system 31 and the photodetection system 32. The following describes these components in sequence with reference to Fig. 4. Fig. 4 is a diagram showing a specific configuration of the referential interference system 30 of the distance measuring device 1 according to Embodiment 1.

The light interference system 31 is an optical system that uses a Sagnac type of Michelson interference system. The beam L1r, which is part of the laser beam L1 divided by the optical brancher 20, and the reference laser beam Lr fall on different positions of incidence on the light interference system 31. As shown in Fig. 4, the light interference system 31 includes a beam splitter 33, mirrors 34 and 35, and a moving mirror 36.

The beam splitter 33 is an optical element that divides an incoming beam into a plurality of beams by intensity and emits the plurality of beams in different directions. The beam splitter 33 is, for example, a semitransparent mirror and divides the incoming beam into a transmitted beam and a reflected beam so that the transmitted beam and the reflected beam have the same intensity. The intensity ratio of the transmitted beam to the reflected beam may not be 1:1.

Specifically, the beam splitter 33 divides the beam L1r into two beams L1ra and L1rb. Further, the beam splitter 33 divides the reference laser beam Lr into two beams Lra and Lrb. In the example shown in Fig. 4, the beams L1ra and Lra are reflected beams reflected off the beam splitter 33 and are emitted toward the mirror 35. The beams L1rb and Lrb are transmitted beams transmitted through the beam splitter 33 and are emitted toward the mirror 34.

The mirror 34 reflects the beams L1rb and Lrb toward the moving mirror 36. The mirror 35 reflects the beams L1ra and Lra toward the moving mirror 36.

The moving mirror 36 has two reflective surfaces 36a and 36b. The reflective surface 36a reflects each of the beams Lra and L1ra. The beams Lra and L1ra reflected off the reflective surface 36a fall on the beam splitter 33 after being reflected off the mirror 35, and at least parts of the beams Lra and L1ra are transmitted. The reflective surface 36b reflects each of the beams Lrb and L1rb. The beams Lrb and L1rb reflected off the reflective surface 36b fall on the beam splitter 33 after being reflected off the mirror 34, and at least parts of the beams Lrb and L1rb are reflected. The beam L1ra transmitted through the beam splitter 33 and the beam L1rb reflected off the beam splitter 33 are subjected to homodyne interference to fall on a photodetector 37 as the interfering beam L1ri. The beam Lra transmitted through the beam splitter 33 and the beam Lrb reflected off the beam splitter 33 are subjected to homodyne interference to fall on a photodetector 38 as the interfering beam Lri.

The moving mirror 36 is capable of changing the positions of the reflective surfaces 36a and 36b. For example, a movable stage is provided that movably supports at least either of the reflective surfaces 36a and 36b. Changing the positions of the reflective surfaces 36a and 36b brings about a change in optical path length of a beam that travels through the light interference system 31. That is, the moving mirror 36 is an example of an optical path difference changing mechanism that changes the difference between the optical path length of the beam L1r passing through the light interference system 31 and the optical path length of the reference laser beam Lr passing through the light interference system 31. Adjusting the optical path difference causes the interfering beams Lri and L1ri to change.

The optical path difference of the light interference system 31 needs only be able to change the optical path lengths and is not limited to the moving mirror 36. For example, the light interference system 31 may include, as an optical path difference changing mechanism, an electrooptical modulator (EOM) placed on the optical path.

As shown in Fig. 4, the photodetection system 32 includes the photodetectors 37 and 38. The photodetectors 37 and 38 each include a photoelectric conversion element that generates an electric signal corresponding to the intensity of the incoming beam.

The photodetector 37 has sensitivity to at least the wavelength λ₁ and, by photoelectrically converting the beam of the wavelength λ₁, outputs, as the first signal S1 to the signal processing system 50, an interfering signal S11 having a signal level corresponding to the intensity of the beam. The interfering signal S11 is a signal obtained by detecting the interfering beam L1ri produced by homodyne interference of the beam L1r, which is part of the laser beam L1.

The photodetector 38 has sensitivity to at least the wavelength λr and, by photoelectrically converting the beam of the wavelength λr, outputs, as the first signal S1 to the signal processing system 50, an interfering signal S12 having a signal level corresponding to the intensity of the beam. The interfering signal S12 is a signal obtained by detecting the interfering beam Lri produced by homodyne interference of the reference laser beam Lr.

### [2. Principle of Ranging]

The following describes the principle of ranging by the distance measuring device 1 according to the present embodiment.

The distance measuring device 1 according to the present embodiment performs ranging based on multiple-wavelength interferometry (MWI) involving the use of a plurality of laser beams. MWI makes it possible to, by combining results of interference of a plurality of single-wavelength laser beams of different wavelengths, resolve the trade-off between a length measurement range and length measurement accuracy and attain a long length measurement range and high length measurement accuracy. The following describes the principle of multiple-wavelength interferometry.

### [2-1. First Measurement (Involving Use of One Wavelength)]

First, a first measurement involving the use of one single-wavelength laser beam is described.

As described with reference to Fig. 3, homodyne optical interferometry causes a single-wavelength laser beam to be split by the beam splitter 43 into a beam that is shone on the mirror 44, which functions as a reference surface, and a beam that is shone on the physical object 90, which is an object the distance to which is to be measured. Beams reflected by the mirror 44 and the physical object 90 are subjected to interference at the beam splitter 43. The strength P_{PD} of a signal that is outputted from the photodetector 47 when the beams subjected to interference are detected by the photodetector 47 is expressed by Formula (1) as follows:
[Math. 1] ${P}_{PD} ∝ 1 - cos \left(\frac{4 {πL}_{-}}{{λ}_{k}}\right)$

In Formula (1), L₋ = Lₓ - L_{y}. Lₓ is the distance from the beam splitter 43 to the reflective surface of the mirror 44. L_{y} is the distance from the beam splitter 43 to the physical object 90. λₖ is the wavelength of the single-wavelength laser beam. Note here that k = 1. λₖ is calculated on the basis of the first signal S1 outputted from the referential interference system 30. As a result, Lₓ and λₖ both take on values known to the processing circuit 53. This allows the processing circuit 53 to calculate the distance L_{y} from the beam splitter 43 to the physical object 90 on the basis of the signal strength P_{PD}.

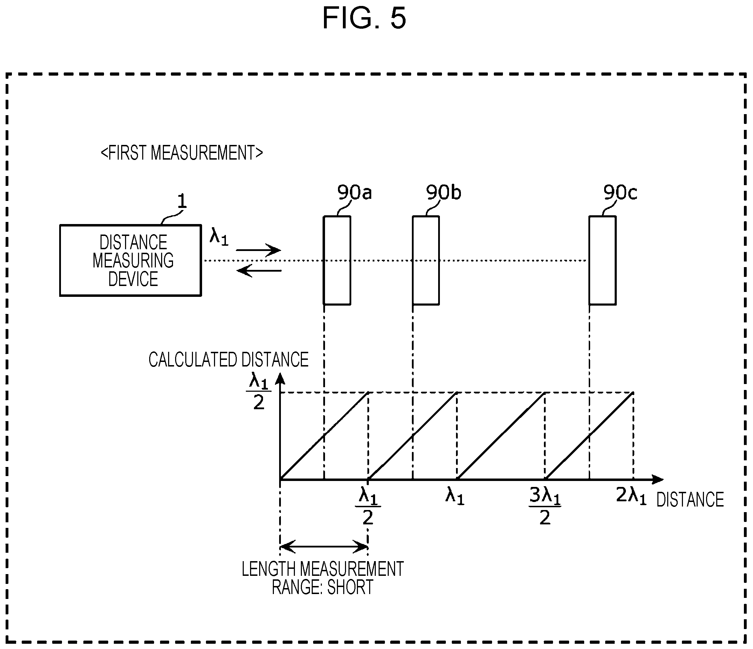

The first measurement is undesirably relatively short in length measurement range. The following describes a relationship between the position of the physical object 90 and the length measurement range with reference to Fig. 5.

Fig. 5 is a diagram for explaining the principle of a first measurement by the distance measuring device 1 according to Embodiment 1 using a single-wavelength laser beam. In Fig. 5, the physical objects 90a, 90b, and 90c show that the physical object 90 shown in Figs. 1 and 3 is located in different positions. In a case where there is no need to make distinctions among the positions, the physical objects 90a, 90b, and 90c are described as "physical object 90".

Fig. 5 shows a graph whose horizontal axis represents the distance to the physical object 90 with a predetermined position serving as an origin and whose vertical axis represents the distance calculated by the processing circuit 53. As shown in Fig. 5, the processing circuit 53 can calculate the distance from the distance measuring device 1 to the physical object 90 within a predetermined length measurement range. As can be seen from Formula (1), in a case where λ₁ is the wavelength of the single-wavelength laser beam, the length measurement range is a half wavelength thereof (λ₁/2).

In the first measurement, the absolute distance from the distance measuring device 1 to the physical object 90 cannot be calculated beyond the length measurement range. For example, in the example shown in Fig. 5, the physical objects 90a, 90b, and 90c are calculated to be all at the same distance.

The wavelength of the single-wavelength laser beam is a wavelength in a near-infrared light band or a visible light band. The near-infrared light band is a band of wavelengths longer than or equal to approximately 700 nm and shorter than or equal to approximately 2500 nm. The visible light band is a band of wavelengths longer than or equal to approximately 380 nm and shorter than or equal to approximately 780 nm. In this case, the length measurement range in the first measurement is from approximately 190 nm to approximately 1250 nm. That is, the length measurement range in the first measurement is of the order of several hundreds of nanometers to several micrometers. Thus, the length measurement range of the first measurement is comparatively narrower than that of the after-mentioned second measurement.

### [2-2. Second Measurement (Involving Use of Two Wavelengths)]

Next, a second measurement that uses two single-wavelength laser beams of different wavelengths to address the problem of the first measurement, namely the shortness of the length measurement range, is described with reference to Figs. 3 and 6.

As shown in Fig. 3, in the distance measuring device 1 according to the present embodiment, beams subjected to interference at the beam splitter 43 are separated by the dichroic mirror 45 for each wavelength and detected by the two photodetectors 47 and 48. As a result, from each of the photodetectors 47 and 48, a signal corresponding to the result of homodyne optical interferometry for each corresponding wavelength is outputted. The processing circuit 53 can calculate the distance from the distance measuring device 1 to the physical object 90 on the basis of two signals.

In the second measurement, a longer length measurement range is attained by combining the two signals. The following describes a relationship between the position of the physical object 90 and the length measurement range with reference to Fig. 6.

Fig. 6 is a diagram for explaining the principle of a second measurement by the distance measuring device 1 according to Embodiment 1 using two single-wavelength laser beams. In Fig. 6, the physical objects 90a, 90b, and 90c show that the physical object 90 shown in Figs. 1 and 3 is located in different positions. In a case where there is no need to make distinctions among the positions, the physical objects 90a, 90b, and 90c are described as "physical object 90".

Fig. 6 shows two graphs whose horizontal axes represent the distance to the physical object 90 with a predetermined position serving as an origin and whose vertical axes represent the distance calculated by the processing circuit 53. The upper one of the two graphs is the same as the graph shown in Fig. 5 and represents the distance calculated on the basis of a signal obtained from one of the two photodetectors 47 and 48. The lower one of the two graphs represents the distance calculated on the basis of a signal obtained from the other of the two photodetectors 47 and 48.

Simply using each of the two graphs alone hardly causes the length measurement range to differ in order from that of the first measurement, as the length measurement range is λ₁/2 or λ₂/2. In the second measurement, a longer length measurement range can be attained by combining the two graphs.

Specifically, the physical objects 90a, 90b, and 90c are substantially the same as one another in terms of the distance calculated in correspondence with the upper graph. However, the physical objects 90a, 90b, and 90c are different from one another in terms of the distance calculated in correspondence with the lower graph. For this reason, by combining two results of calculation, the distance can be calculated in a length measurement range that is longer than both λ₁/2 and λ₂/2. Specifically, the processing circuit 53 calculates the absolute distance from the distance measuring device 1 to the physical object 90 by combining a first distance obtained by the first measurement and a second distance obtained by the second measurement.

The length measurement range in the second measurement is half of the beat wavelength of the two single-wavelength laser beams. For example, assuming that λ₁ and λ₂ are the wavelengths of the two single-wavelength laser beams, the beat wavelength Λ₁₂ is expressed by Formula (2) as follows:
[Math. 2] ${Λ}_{12} = \frac{{λ}_{1} {λ}_{2}}{\left|{λ}_{1}-{λ}_{2}\right|}$

Optical interferometry based on this beat wavelength Λ₁₂ makes it possible to perform a distance measurement in a length measurement range equivalent to half of the beat wavelength Λ₁₂. For example, in a case where λ₁ and λ₂ are 1550 nm and 1551 nm, respectively, the beat wavelength Λ₁₂ is 2.4 mm and the length measurement range is 1.2 mm. While the length measurement range in the case of single-wavelength interferometry is approximately 775 nm on the order of nanometers, the length measurement range of MWI is extended to the order of millimeters.

### [2-3. Length Measurement Accuracy]

The following describes the length measurement accuracy of each of the first and second measurements.

The length measurement accuracy depends on the wavelength of a single-wavelength laser beam that is used for the measurement. Specifically, the shorter the wavelength of the single-wavelength laser beam is, the higher the length measurement accuracy becomes (i.e. the smaller it becomes in the distance dimension), and the longer the wavelength of the single-wavelength laser beam is, the lower the length measurement accuracy becomes (i.e. the longer it becomes in the distance dimension).

In a case where two single-wavelength laser beams are used as in the case of the second measurement, the length measurement accuracy depends on the beat wavelength. Specifically, the shorter the beat wavelength is, the higher the length measurement accuracy becomes (i.e. the smaller it becomes in the distance dimension), and the longer the beat wavelength is, the lower the length measurement accuracy becomes (i.e. the longer it becomes in the distance dimension).

Since the beat wavelength is longer than the wavelength of the single-wavelength laser beam, the second measurement is lower in length measurement accuracy than the first measurement. That is, the length measurement accuracy of the second measurement deteriorates due to the beat wavelength Λ₁₂. Thus, simply using the second measurement does not resolve the trade-off between a length measurement range and length measurement accuracy.

To resolve this trade-off, MWI attains both a long length measurement range and high length measurement accuracy at the same time by combining the first measurement and the second measurement. That is, both a long length measurement range and high length measurement accuracy are attained by combining the first measurement, which is short in length measurement range but high in length measurement accuracy, and the second measurement, which is low in length measurement accuracy but long in length measurement range.

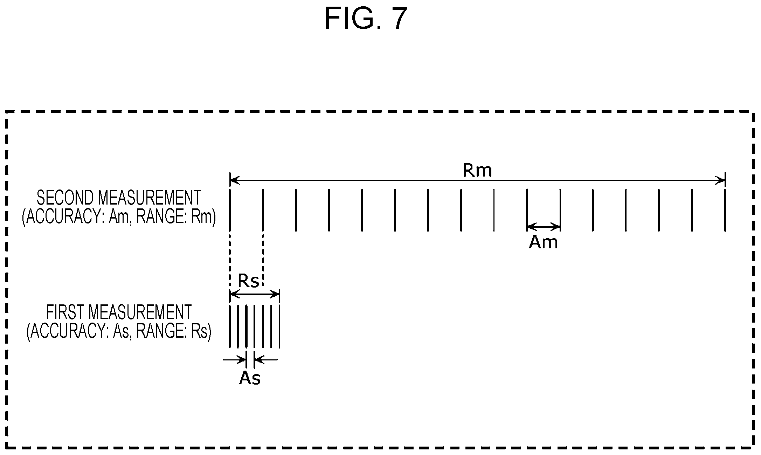

Fig. 7 is a diagram showing length measurement ranges and length measurement accuracies of the two measurements by the distance measuring device 1 according to Embodiment 1. As shown in Fig. 7, let it be assumed that Am is the length measurement accuracy (second length measurement accuracy) in the second measurement and that Rm is the length measurement range (second length measurement range) in the second measurement. Let it also be assumed that As is the length measurement accuracy (first length measurement accuracy) in the first measurement and that Rs is the length measurement range (first length measurement range) in the first measurement. The length measurement ranges and the length measurement accuracies can be compared with each other, as they are both expressed in the distance dimension.

As mentioned above, further, as shown in Fig. 7, Rm > Rs and Am > As hold. Further, in the present embodiment, Am ≤ Rs holds. That is, the length measurement accuracy Am of the second measurement is lower than or equal to the length measurement range Rs of the first measurement. This makes it possible to uniquely combine the first measurement and the second measurement, thus making it possible to perform a distance measurement with length measurement accuracy that is higher than the length measurement accuracy of the second measurement.

To attain higher length measurement accuracy, it is important that an accurate value of the wavelength of the laser beam L1 that is used for the first measurement be used to calculate the distance.

### [3. Relationship between Wavelength and Frequency Stability and Length Measurement Accuracy]

The following describes a relationship between wavelength and frequency stability and length measurement accuracy.

The wavelength and frequency of a laser beam are adjusted by a controller (not illustrated) so that predetermined set values are maintained. Specifically, the wavelength is kept constant by adjusting the amount of current that is supplied to a laser light source and/or the temperature of the laser light source. In the present embodiment, the set wavelength of the light source module 10 is controlled so that the set wavelength is fixed during a measurement period.

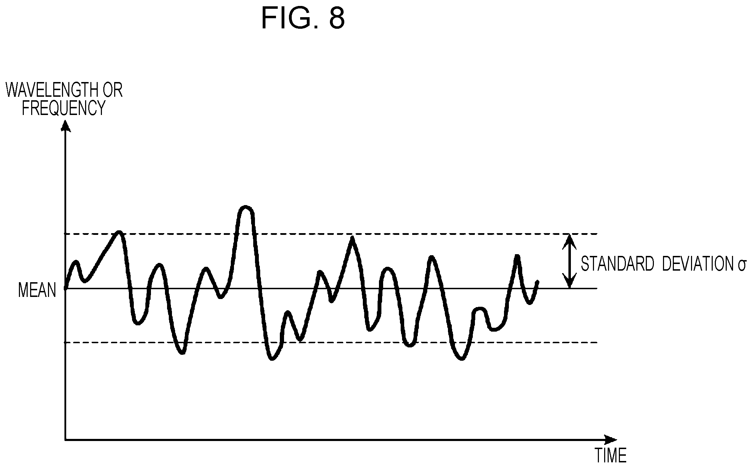

However, because of the characteristics of the laser light source, it is difficult to completely keep the wavelength constant. As shown in Fig. 8, the wavelength of a single-wavelength laser beam changes over time, i.e. fluctuates. Fig. 8 is a diagram for explaining the stability of the wavelength of a single-wavelength laser beam. In Fig. 8, the horizontal axis represents time, and the vertical axis represents the wavelength or frequency of the single-wavelength laser beam. Fig. 8 shows a short-term fluctuation in wavelength.

The fluctuation in wavelength is represented, for example, by the standard deviation σ shown in Fig. 8. The standard deviation σ can be statistically calculated with respect to the mean or median of wavelengths of a laser beam within a finite length of time. The fluctuation in wavelength may be expressed by a unit of frequency or may be expressed by another unit correlated with wavelength.

As can be seen from the aforementioned Formula (1), a fluctuation in wavelength λₖ causes a discrepancy between the wavelength of a single-wavelength laser beam actually used for a measurement and a calculated wavelength. This causes variations in the value of the distance calculated, thus causing deterioration in length measurement accuracy. In this way, there is a correlation between the fluctuation in wavelength and the length measurement accuracy. Specifically, the smaller the fluctuation is, the higher the length measurement accuracy becomes.

Wavelength stability is represented by a value negatively correlated with a fluctuation in the wavelength of a laser beam with respect to time change. Specifically, the smaller the fluctuation is, the higher the wavelength stability is, and the larger the fluctuation is, the lower the wavelength stability is.

Examples of the laser light source 13a that emits the laser beam L1 include, but are not limited to, a DFB laser light source having a high-wavelength(frequency)-stability feature or a light source device obtained by combining an absorption line of a gas cell as a reference frequency and a semiconductor laser.

A DFB laser is high in wavelength stability, but when the DFB laser operates for a longer period of time (e.g., 30 minutes or longer), the DFB laser deteriorates in length measurement accuracy, as the wavelength drifts. That is, even if a wavelength-stabilized laser light source is used as a light source that emits the laser beam L1, it is impossible, from a long-term perspective, to reduce deterioration in length measurement accuracy and long-term stability. A long-term fluctuation in wavelength can be deemed as the amount of drift in peak wavelength.

On the other hand, in the present embodiment, the processing circuit 53 calculates the wavelength λ₁ on the basis of the first signal S1 outputted from the referential interference system 30. Specifically, the processing circuit 53 calculates the wavelength λ₁ by using the interfering signals S11 and S12 to make a comparison between the numbers of waves of the interfering signals, a spectrum comparison based on Fourier transformation, or other comparisons (see, for example, PTL 3). Moreover, the processing circuit 53 calculates the distance from the distance measuring device 1 to the physical object 90 by using the wavelength λ₁ thus calculated. With this, even if the wavelength of the laser beam L1 fluctuates, the wavelength λ₁ can be obtained with a high degree of accuracy at a point of time where the laser beam L1 is used for a measurement. This makes it possible to increase the length measurement accuracy and long-term stability of the distance measuring device 1.

Although the processing circuit 53 calculates the wavelength λ₁ of the laser beam L1 that is used for the first measurement required to be a high-accuracy measurement, the processing circuit 53 may also calculate the wavelength λ₂ of the laser beam L2. To calculate the wavelength λ₂, it is only necessary to use the optical brancher 20 to divide the laser beam L2 into a first beam and a second beam, input the first beam to the referential interference system 30, and obtain an interfering signal by homodyne interference of the second beam.

Thus, according to the present embodiment, even if the wavelength λ₁ of the laser beam L1 fluctuates, the wavelength λ₁ used for an actual measurement can be used to calculate the distance, as the wavelength λ₁ calculated on the basis of the first signal S1 from the referential interference system 30 is used. This makes it possible to increase the length measurement accuracy and long-term stability of the distance measuring device 1.

### [4. Calculation of Absolute Distance]

The following describes an example of a method for calculating the absolute distance from the distance measuring device 1 to the physical object 90 by MWI using two single-wavelength laser beams.

In the second measurement, the phases of each separate wavelength are calculated on the basis of signals from the two photodetectors 47 and 48 shown in Fig. 3, and the difference between the phases is acquired as the phase of the beat wavelength Λ₁₂. In a case where a condition for performing the MWI is satisfied, the wave number N of the wavelength λ₁ of the laser beam L1, whose frequency less fluctuates, is determined from a component of the quotient obtained by dividing, by the wavelength λ₁ of the laser beam L1, the rough distance calculated from the phase of the beat wavelength Λ₁₂. In this case, as the wavelength λ₁ of the laser beam L1, a value calculated on the basis of the first signal S1 is used. Next, in the first measurement, the phase φ of a single wavelength is calculated on the basis of a signal from one (in this case, the photodetector 47) of the two photodetectors 47 and 48 shown in Fig. 3. On the basis of the foregoing result, the absolute distance x is calculated using Formula (3) as follows:
[Math. 3] $x = \frac{{λ}_{1}}{2} \left(N+\frac{ϕ}{2 π}\right)$

A major cause of the fluctuation component of the distance x thus calculated is φ and is attributed to the fluctuation in the wavelength of a first single-wavelength laser beam. Therefore, the accuracy of calculation of the absolute distance can be increased by using, as the wavelength λ₁ of the laser beam L1 for use in the first measurement, the value obtained by calculation. Further, an optimum combination of wavelengths is attained when the laser beam L1 for use in the first measurement is a laser that least fluctuates in wavelength, i.e. that is highest in wavelength stability. Although details will be described later, the technique according to the present disclosure can also be applied in a similar procedure when the number of wavelengths is 3 or greater.

### [5. Operation (Distance Measuring Method)]

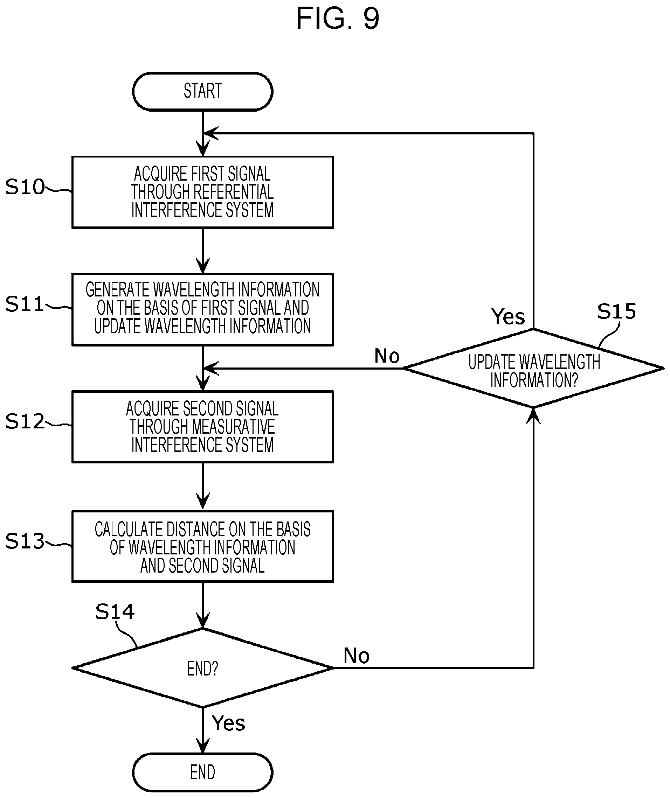

The following describes operation of the distance measuring device 1 according to the present embodiment with reference to Fig. 9. Fig. 9 is a flow chart showing operation of the distance measuring device 1 according to the present embodiment.

As shown in Fig. 9, first, the distance measuring device 1 acquires a first signal S1 through the referential interference system 30 (S10). Specifically, the light source module 10 outputs a laser beam L1 and/or a laser beam L2 and outputs a reference laser beam Lr. Of these, the laser beam L1 is divided by the optical brancher 20 into a beam L1r and a beam L1t. The referential interference system 30 outputs interfering signals S11 and S12 as the first signal S1 to the signal processing system 50 by subjecting the beam L1r and the reference laser beam Lr to homodyne interference and detecting the beam L1r and the reference laser beam Lr.

Next, the signal processing system 50 generates wavelength information on the basis of the first signal S1 and updates the wavelength information stored in the memory 52 (S11). The wavelength information is information indicating the wavelength λ₁ of the laser beam L1. The wavelength information thus generated is stored in the memory 52.

Next, the distance measuring device 1 acquires a second signal S2 through the measurative interference system 40 (S12). Specifically, the measurative interference system 40 receives a beam L1t and a beam L2t (laser beam L2) and reflected beams L1c and L2c produced by these beams being reflected by the physical object 90. The measurative interference system 40 outputs interfering signals S21 and S22 as the second signal S2 to the signal processing system 50 by subjecting the beam L1t and the reflected beam L1c to homodyne interference and detecting the beam L1t and the reflected beam L1c and by subjecting the beam L2t and the reflected beam L2c to homodyne interference and detecting the beam L2t and the reflected beam L2c.

Next, the signal processing system 50 calculates the distance on the basis of the wavelength information stored in the memory 52 and the second signal S2 (S13). The length measurement accuracy can be increased by using the wavelength λ₁ indicated by the wavelength information.

In a case where the distance measuring process is not ended (No in S14), the signal processing system 50 determines whether to update the wavelength information (S15). The wavelength information is updated at a predetermined timing. In a case where the wavelength information is updated (Yes in S15), the distance measuring device 1 acquires the first signal (S10) and updates the wavelength information (S11).

In a case where the wavelength information is not updated (No in S15), the distance measuring device 1 acquires the second signal (S12) and calculates the distance (S13). The distance is calculated using the wavelength information stored in the memory 52.

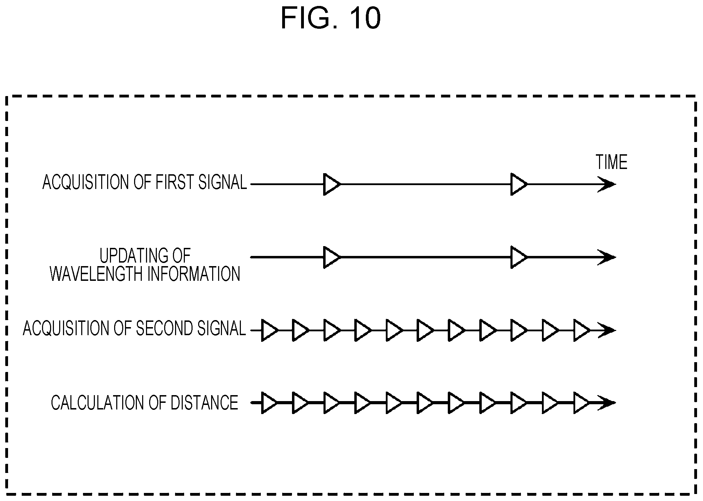

Fig. 10 is a diagram showing a relationship between the frequency of updating of wavelength information and the frequency of calculation of distance. In Fig. 10, the arrows represent the flow of time, and the triangles represent timings at which corresponding processes are performed.

The acquisition of the first signal and the updating of the wavelength information are, for example, regularly repeatedly performed at predetermined intervals. The frequency of acquisition of the first signal S1 and the frequency of updating of the wavelength information are lower than the frequency of acquisition of the second signal S2 and the frequency of calculation of the distance. Reducing the frequency of acquisition of the first signal S1 and the frequency of updating of the wavelength information makes it possible to reduce electric power required for operation of the referential interference system 30 and the signal processing system 50.

In a case where the wavelength information is not updated, the laser beam L1 used in acquiring the second signal S2 in step S12 is a beam that is different in timing of emission from the laser beam L1 used in generating the wavelength information stored in the memory 52. Using, as the laser light source 13a that emits the laser beam L1, a DFB laser light source that less fluctuates in wavelength on a short-term basis or other light sources makes it possible to reduce deterioration in length measurement accuracy. Furthermore, according to the present embodiment, updating at a predetermined timing the wavelength information stored in the memory 52 makes it possible to reduce deterioration in length measurement accuracy even in a case where there occurs a long-term fluctuation in the wavelength λ₁ of the laser beam L1, i.e. a drift in the wavelength λ₁. This makes it possible to reduce deterioration in length measurement accuracy and long-term stability of the distance measuring device 1.

In a case where a fluctuation in the wavelength information with respect to time is small, the wavelength information stored in the memory 52 may be updated after the occurrence of a certain or greater wavelength drift from the wavelength at the start of the measurement. Specifically, in a case where the fluctuation in the wavelength λ₁ of the first laser beam L1 exceeds a threshold, the signal processing system 50 may generate wavelength information and update the wavelength information stored in the memory 52. That is, the processing circuit 53 may regularly calculate the wavelength λ₁ and, in a case where the amount of difference between the value of the wavelength λ₁ thus calculated and the initial value at the start of the ranging or the set wavelength of the laser light source, i.e. the fluctuation in the wavelength λ₁, exceeds a threshold, the processing circuit 53 may update the wavelength information stored in the memory 52. Further, it is possible to, instead of updating the wavelength information, warn a user of a measurement error by performing error output through a display and/or an audio outputter.

Alternatively, the frequency of updating of the wavelength information and the frequency of calculation of the distance may be equal to each other. In this case, a laser light source that greatly fluctuates in wavelength can be used as the laser light source 13a. Since an inexpensive laser light source can be used, a reduction in cost of the distance measuring device 1 can be achieved.

Further, in the case of a short-term measurement, the wavelength information needs only be updated once prior to the start of the measurement. That is, the process of step S15 does not need to be executed.

The number of times the wavelength information is updated prior to the start of the measurement is not limited to 1. The wavelength information may be updated in a case where predetermined conditions are satisfied. One of the predetermined conditions is passage of a certain period of time. Specifically, the wavelength information may be updated on a regular basis, e.g. once in a day, a week, or a month. It may be considered that there is no fluctuation in wavelength during a period of absence of a measurement.

Further, one of the predetermined conditions may be that a drift in wavelength is out of a range of thresholds. Specifically, it may be confirmed by indirectly measuring the wavelength of a laser beam that a drift in wavelength falls within the range of thresholds (e.g. 1 nm/8 hours), and the wavelength information may be updated when the drift in wavelength falls out of the range of thresholds. An example of an indirectly wavelength monitoring method is to measure changes in temperature and air pressure in an area around a laser light source or to measure the temperature of the laser light source per se.

As noted above, the distance measuring device 1 according to the present embodiment uses not heterodyne interference but homodyne interference. Whereas heterodyne interference makes it necessary to shorten the interval between the wavelengths of two beams, homodyne interference imposes no restrictions on wavelengths. For this reason, the distance measuring device 1 has the advantage of being high in wavelength selectivity of each of the laser beams L1 and L2 that are used for a measurement.

For example, in a case where the physical object 90 is an AR (antireflection) coated lens, a laser beam that is shone on the physical object 90 needs to be out of the visible light band. In this case, it is desirable to use a laser beam in a widely used communication wavelength band. The present embodiment, which is high in wavelength selectivity, allows a measurative laser beam to have a wavelength in the communication wavelength band and allows a reference laser beam to have a short wavelength that makes the length measurement accuracy even higher. In addition to bringing the benefits of being able to optimize the wavelength of a laser beam with respect to a sample and being able to increase the length measurement accuracy, this makes it possible to achieve a reduction in cost by being able to use an optical element widely used in optical communication in the communication wavelength band or other bands.

Further, in a case where heterodyne interference is used, it is necessary to use as many measurative laser light sources as referential laser light sources, with the results that there are increases in size and cost of the device. On the other hand, the distance measuring device 1 according to the present embodiment, which needs only include one laser light source 13r as a referential laser light source, makes it possible to achieve a simplified, small-sized, and low-cost configuration of the distance measuring device. Furthermore, being able to use a more stable single-wavelength laser typified by a HeNe laser makes wavelength measurement accuracy high with respect to another method, resulting in making length measurement accuracy and long-term stability high with respect to another method.

### (Embodiment 2)

The following describes Embodiment 2.

A distance measuring device according to Embodiment 2 differs from that of Embodiment 1 mainly in that the light source module includes an adjuster that adjusts the wavelength of a laser beam. The following gives a description with a focus on points of difference from Embodiment 1, and a description of common features is omitted or simplified.

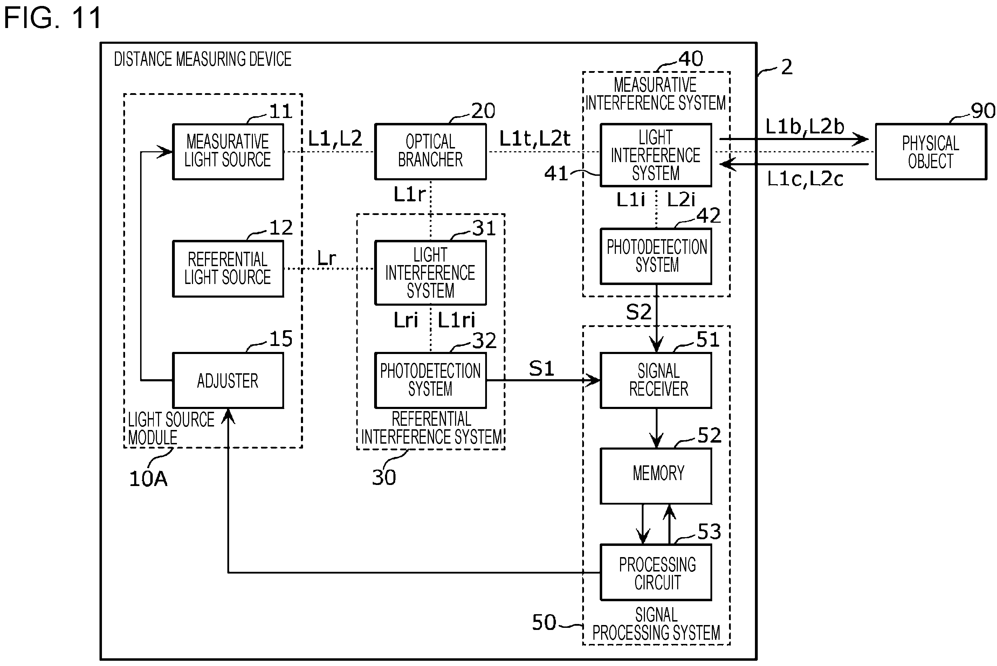

Fig. 11 is a block diagram showing a configuration of a distance measuring device 2 according to the present embodiment. As shown in Fig. 11, the distance measuring device 2 differs from the distance measuring device 1 shown in Fig. 1 in that the distance measuring device 2 includes a light source module 10A in place of the light source module 10. The light source module 10A includes an adjuster 15 in addition to the components of the light source module 10.

The adjuster 15 adjusts the wavelength of the first laser beam on the basis of the wavelength information. The adjuster 15 adjusts the wavelength λ₁ of the first laser beam L1 by controlling, for example, the operating temperature of the laser light source 13a of the measurative light source 11 and/or the current to be applied to the laser light source 13a of the measurative light source 11. For example, the adjuster 15 makes an adjustment so that the value of the wavelength λ₁ that has fluctuated (drifted) returns to the initial state, i.e. the wavelength λ₁ at the start of the measurement. The adjuster 15 acquires wavelength information generated by the processing circuit 53 and, in a case where the wavelength λ₁ indicated by the wavelength information thus acquired exceeds a threshold, adjusts the wavelength λ₁.

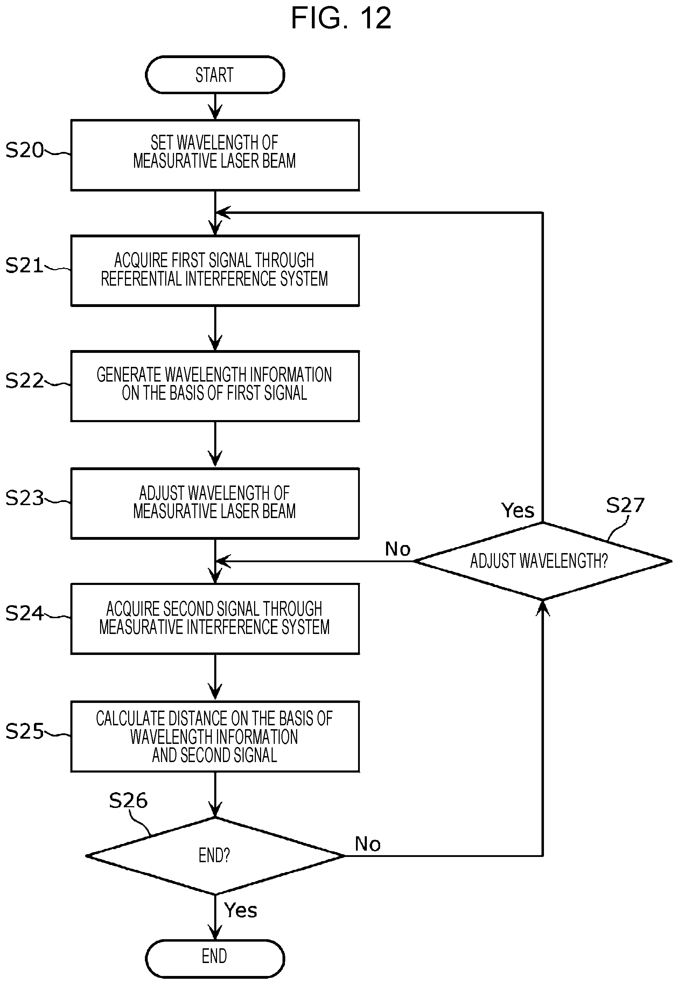

Fig. 12 is a flow chart showing operation of the distance measuring device 2 according to the present embodiment.

As shown in Fig. 12, first, in the distance measuring device 2, the adjuster 15 sets the wavelength of a measurative laser beam (S20). Specifically, the adjuster 15 sets the wavelength λ₁ of the laser beam L1 and the wavelength λ₂ of the laser beam L2 to predetermined values as initial values. The initial values of the wavelength λ₁ and the wavelength λ₂ are determined, for example, on the basis of length measurement accuracy or other conditions required for ranging (e.g. inspection of the surface shape) of the physical object 90.

Next, the distance measuring device 2 acquires a first signal S1 through the referential interference system 30 (S21). The signal processing system 50 generates wavelength information on the basis of the first signal S1 (S22). The wavelength information is information indicating the wavelength λ₁ of the laser beam L1. The wavelength information thus generated is stored in the memory 52. Steps S21 and S22 are the same processes as steps S10 and S11 shown in Fig. 9.

Next, the adjuster 15 adjusts the wavelength λ₁ of the laser beam L1 (S23). Specifically, on the basis of the wavelength λ₁ indicated by the wavelength information stored in the memory 52, the adjuster 15 adjusts, for example, the operating temperature of the laser light source 13a and/or the current to be applied to the laser light source 13a so that the value of the wavelength λ₁ becomes equal to the initial value of the wavelength λ₁ of the laser beam L1. In a case where the difference between the wavelength λ₁ indicated by the wavelength information stored in the memory 52 and the initial value of the wavelength λ₁ of the laser beam L1 is less than a threshold, the adjusting process (S23) may be omitted.

Next, the distance measuring device 2 acquires a second signal S2 through the measurative interference system 40 (S24). Next, the signal processing system 50 calculates the distance on the basis of the wavelength information stored in the memory 52 and the second signal S2 (S25). The length measurement accuracy can be increased by using the wavelength λ₁ indicated by the wavelength information. Steps S24 and S25 are the same processes as steps S12 and S13 shown in Fig. 9.

In a case where the distance measuring process is not ended (No in S26), the signal processing system 50 determines whether to adjust the wavelength λ₁ (S27). The wavelength λ₁ is adjusted at a predetermined timing. In a case where the wavelength λ₁ is adjusted (Yes in S27), the distance measuring device 2 acquires the first signal (S21), generates wavelength information (S22), and adjusts the wavelength λ₁ (S23).

In a case where the wavelength λ₁ is not adjusted (No in S27), the distance measuring device 2 acquires the second signal (S24) and calculates the distance (S25). The distance is calculated using the wavelength information stored in the memory 52.

Thus, the distance measuring device 2 according to the present embodiment makes it possible to reduce a fluctuation in the wavelength λ₁ of the laser beam L1 that is used for ranging, thus making it possible to increase the length measurement accuracy. The adjuster 15 may further adjust the wavelength λ₂ of the laser beam L2, making it possible to further increase the length measurement accuracy.

As in the case of whether to update the wavelength information in Embodiment 1, whether to adjust the wavelength λ₁ may be determined on the basis of the amount of drift, i.e. the fluctuation in the wavelength λ₁. Further, in the case of a short-term measurement, the wavelength λ₁ needs only be adjusted once prior to the start of the measurement. That is, the process of step S27 does not need to be executed.

### (Embodiment 3)

The following describes Embodiment 3.

A distance measuring device according to Embodiment 3 differs from that of Embodiment 1 mainly in that the referential interference system and the measurative interference system share a light interference system. The following gives a description with a focus on points of difference from Embodiment 1, and a description of common features is omitted or simplified.

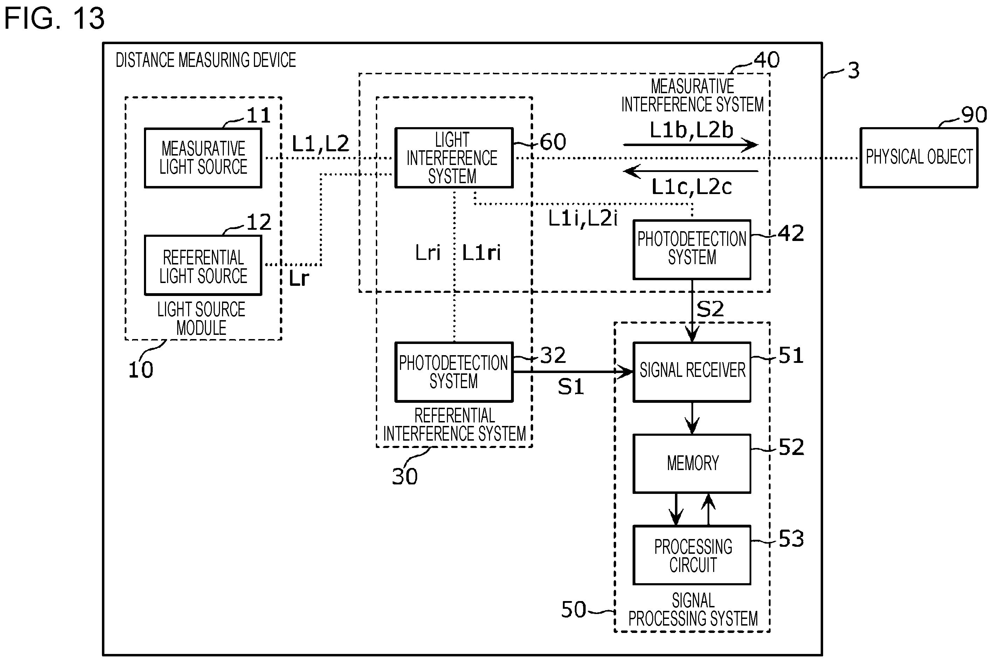

Fig. 13 is a block diagram showing a configuration of a distance measuring device 3 according to the present embodiment. As shown in Fig. 13, the distance measuring device 3 differs from the distance measuring device 1 shown in Fig. 1 in that the referential interference system 30 and the measurative interference system 40 share one light interference system 60. In this case, it is not necessary to divide the laser beam L1 emitted from the measurative light source 11. For this reason, the distance measuring device 3 does not need to include the optical brancher 20.

Thus, the present embodiment makes it possible to reduce the number of constituent elements that the distance measuring device 3 includes, thus making it possible to achieve reductions in size and weight of the distance measuring device 3. The distance measuring device 3 is the same in operation as the distance measuring device 1. Further, as in the case of the distance measuring device 2 according to Embodiment 2, the light source module 10 of the distance measuring device 3 may include an adjuster 15.

### (Modifications)

The following describes modifications. Modifications 1 and 2 described below both differ mainly in light source module configuration from the embodiments. A description of components other than the light source module is omitted or simplified, as the components are the same as those of the embodiments.

### [Modification 1]

Modification 1 differs from the embodiments mainly in that three single-wavelength laser beams are used for ranging. The following gives a description with a focus on points of difference from the embodiments, and a description of common features is omitted or simplified.

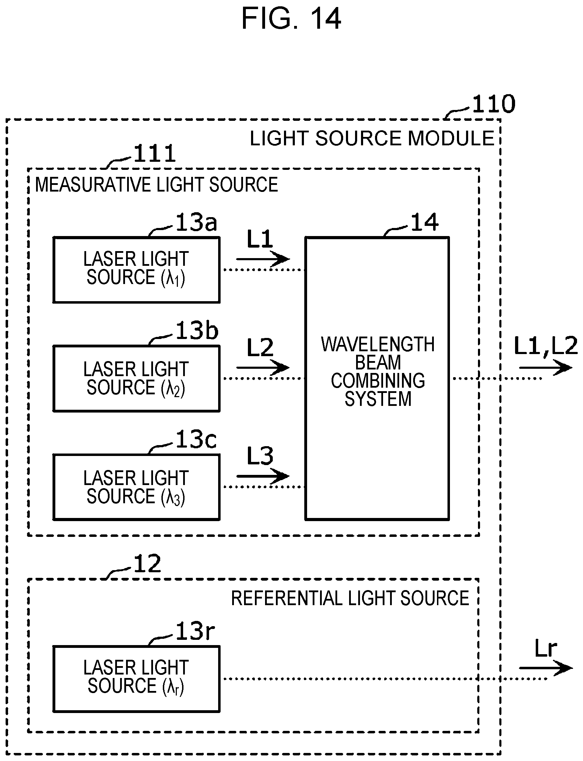

Fig. 14 is a block diagram showing a configuration of a light source module 110 of a distance measuring device according to Modification 1. As shown in Fig. 14, the light source module 110 includes a measurative light source 111 and a referential light source 12. The measurative light source 111 includes three laser light sources 13a, 13b, and 13c and a wavelength beam combining system 14. A description of the laser light sources 13a and 13b is omitted, as the laser light sources 13a and 13b are the same as those of the embodiments.

The laser light source 13c is, for example, a semiconductor laser element and, in a case where a current is supplied, emits a predetermined single-wavelength laser beam. The laser light source 13c is an example of a third laser light source and emits a laser beam L3 having a wavelength λ₃. The wavelength λ₃ is an example of a third wavelength, and the laser beam L3 is an example of one of a plurality of second laser beams. The wavelength λ₃ is a wavelength that is different from both the wavelength λ₁ and the wavelength λ₂. In the present embodiment, the wavelength λ₃ is longer than both the wavelength λ₁ and the wavelength λ₂. In this case, for example, the difference between the wavelength λ₃ and the wavelength λ₁ may be ten or more times as great as the difference between the wavelength λ₂ and the wavelength λ₁. Providing a great difference as the difference between two wavelengths makes it possible to make a great difference in beat wavelength. As a result, the length measurement range and the length measurement accuracy can be set in stages, so that the absolute distance can be measured with a high degree of accuracy.

The wavelength beam combining system 14 combines the laser beams L1, L2, and L3 emitted separately from each of the three laser light sources 13a, 13b, and 13c. The wavelength beam combining system 14 is, for example, a DWDM element, a holographic optical element, or other elements.

Components other than the light source module 110 of the distance measuring device according to the present modification are similar to those of the distance measuring device 1 shown in Fig. 1, the distance measuring device 2 shown in Fig. 11, or the distance measuring device 3 shown in Fig. 13. In this case, the photodetection system 42 of the measurative interference system 40 includes a photodetector for detecting light of the wavelength λ₃. Alternatively, the photodetection system 42 may detect beat light by heterodyne interference.

In a case where three single-wavelength laser beams having different wavelengths can be used as in the case of the present modification, there are three combinations of two single-wavelength laser beams. This makes it possible to perform the second measurement on the basis of at least one of the three combinations. Specifically, the second measurement can be performed with the length measurement accuracy and the length measurement range corresponding to at least one of a beat wavelength Λ₁₂ attributed to interference of the laser beam L1 of the wavelength λ₁ and the laser beam L2 of the wavelength λ₂, a beat wavelength Λ₁₃ attributed to interference of the laser beam L1 of the wavelength λ₁ and the laser beam L3 of the wavelength λ₃, and a beat wavelength Λ₂₃ attributed to interference of the laser beam L3 of the wavelength λ₃ and the laser beam L2 of the wavelength λ₂.

The beat wavelength Λ₁₂ is expressed by Formula (2). Further, the beat wavelengths Λ₁₃ and Λ₂₃ are expressed by Formulas (4) and (5), respectively, as follows:
$\begin{matrix}\left(4\right) {Λ}_{13} = \frac{{λ}_{1} {λ}_{3}}{\left|{λ}_{1}-{λ}_{3}\right|} \\ \left(5\right) {Λ}_{23} = \frac{{λ}_{2} {λ}_{3}}{\left|{λ}_{2}-{λ}_{3}\right|}\end{matrix}$

In the present modification, λ₁ < λ₂ < λ₃ is satisfied. Further, |λ₁ - λ₃| is set to be sufficiently greater than |λ₁ - λ₂|. Simply put, λ₁ ≈ λ₂. As a result, the beat wavelength Λ₁₂ and the beat wavelength Λ₁₃ can be made greatly different from each other. Let it be assumed, for example, that λ₁, λ₂, and λ₃ are 1550 nm, 1551 nm, and 1600 nm, respectively. In this case, from Formulas (2) and (4), the beat wavelength Λ₁₂ is approximately 2.4 mm, and the beat wavelength Λ₁₃ is approximately 50 µm. Since λ₁ ≈ λ₂, the beat wavelength Λ₁₃ is substantially equal to the beat wavelength Λ₂₃.

The processing circuit 53 according to the present modification calculates the distance from the distance measuring device to the physical object 90 by performing the second measurement with two of the beat wavelengths Λ₁₂, Λ₁₃, and Λ₂₃ and combining a result of the second measurement with a result of the first measurement. Specifically, the processing circuit 53 calculates the absolute distance from the distance measuring device to the physical object 90 by combining a first distance obtained by the first measurement and two second distances obtained by the second measurement.

The processing circuit 53 uses a beat wavelength based on one of all the single-wavelength laser beams emitted by the light source module 110 that least fluctuates in wavelength and frequency. In this case, since the laser beam L1 least fluctuates in wavelength, the beat wavelengths Λ₁₃ and Λ₁₂ are used. Further, also in the first measurement, the processing circuit 53 uses a result of interference of one of all the single-wavelength laser beams emitted by the light source module 110 that least fluctuates in wavelength.

Assuming here that x is the absolute distance from a probe to the physical object to be measured, the absolute distance x is expressed by Formula (6) as follows:
$x = \left(A\times {Λ}_{13}+B\times {λ}_{1}+{θ}_{i}\times {λ}_{1}\right) / 2$

A and B are the wave numbers of the beat wavelength Λ₁₂ and the wavelength λ₁ included in the absolute distance xᵢ from the probe to a first site of the physical object 90, respectively. θᵢ represents the phase of a result of interference based on the wavelength λ₁ obtained by the first measurement in correspondence with the position of each of the first, second, and third sites of the physical object 90. Formula (6) is equivalent to an extension of Formula (3) to three wavelengths. The first, second, and third sites are sites of the surface of the physical object 90 that are different from one another.

The second measurement is performed with a combination that is longest in beat wavelength. The distance calculated by the second measurement is an example of a third distance that is calculated with a third length measurement accuracy within a third length measurement range. The third length measurement accuracy is lower than the second length measurement accuracy and the first length measurement accuracy. The third length measurement range is longer than the second length measurement range and the first length measurement range. Simply put, the second measurement is performed with a combination that is longest in length measurement range.

In this case, the processing circuit 53 identifies the phase of the beat wavelength Λ₁₂ on the basis of a combination of the wavelength λ₁ and the wavelength λ₂. The processing circuit 53 counts the wave number A of the beat wavelength Λ₁₃ of the next second measurement on the basis of the phase of the beat wavelength Λ₁₂ thus identified. Specifically, the wave number A of the beat wavelength Λ₁₃ is calculated using a component of the quotient obtained by dividing, by the beat wavelength Λ₁₃, the distance calculated on the basis of the beat wavelength Λ₁₂.

Furthermore, as the next second measurement, the processing circuit 53 identifies the phase of the beat wavelength Λ₁₃ on the basis of a combination of the wavelength λ₁ and the wavelength λ₃. The processing circuit 53 counts the wave number B of the wavelength λ₁ of the first measurement on the basis of the phase of the beat wavelength Λ₁₃ thus identified. Specifically, the wave number B of the wavelength λ₁ is calculated by dividing, by the wavelength λ₁, the distance calculated on the basis of the beat wavelength Λ₁₃.

Finally, as the first measurement, the processing circuit 53 identifies the phase θ₁ of the wavelength λ₁. The processing circuit 53 can calculate the absolute distance xᵢ according to the aforementioned Formula (6) on the basis of the wave numbers A and B and the phase θ₁ of the wavelength λ₁.

As noted above, the length measurement range can be further extended by performing a plurality of second measurements with a plurality of beat wavelengths.

The absolute distance may be calculated by a method other than the aforementioned method. For example, an excess fraction method for calculating the absolute distance by combinational matching of the phases of all wavelengths of lasers used may be used.

### [Modification 2]

Modification 2 differs from the embodiments mainly in that the reference laser beam emitted by the referential light source 12 is used for ranging. The following gives a description with a focus on points of difference from the embodiments, and a description of common features is omitted or simplified.

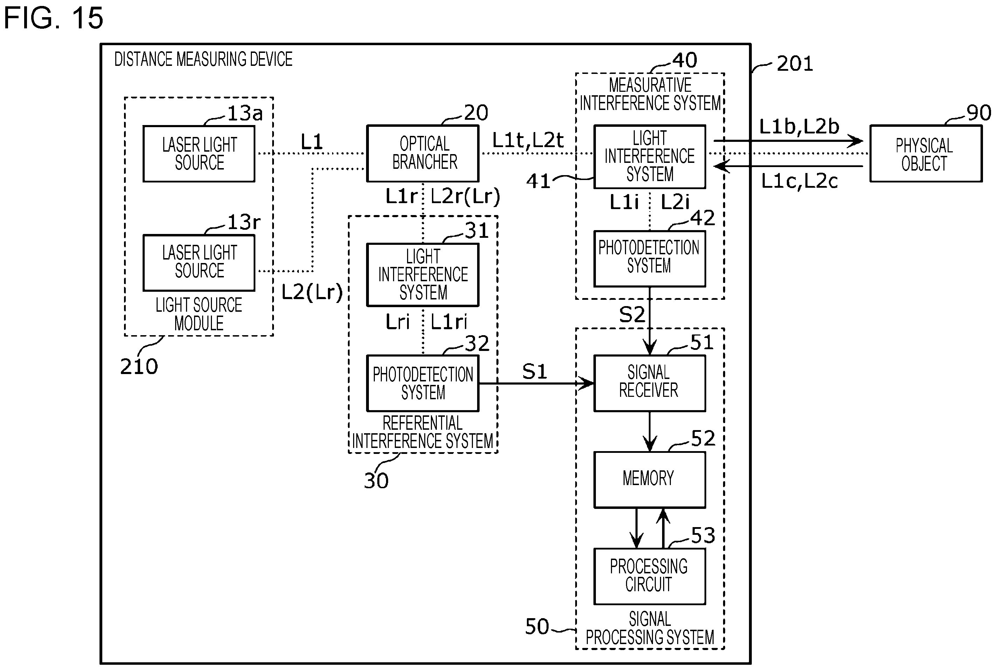

Fig. 15 is a block diagram showing a configuration of a distance measuring device 201 according to Modification 2. As shown in Fig. 15, the distance measuring device 201 differs from the distance measuring device 1 shown in Fig. 1 in that the distance measuring device 201 includes a light source module 210 in place of the light source module 10. The light source module 210 includes a laser light source 13a and a laser light source 13r. The light source module 210 may also include a wavelength beam combining system 14.

As shown in Fig. 2, the laser light source 13r is a light source that emits a reference laser beam Lr. In the present modification, the reference laser beam Lr is also inputted to the measurative interference system 40 as well as the referential interference system 30. That is, the reference laser beam Lr is also used as a second laser beam for use in measurement. Specifically, the reference laser beam Lr is divided by the optical brancher 20 into a beam L2r (Lr) that is inputted to the referential interference system 30 and a beam L2t that is inputted to the measurative interference system 40. For this reason, the measurative interference system 40 receives a reflected beam L2c of the reference laser beam Lr reflected by the physical object 90.

This makes it possible to reduce the number of light sources that the light source module 210 includes, thus making it possible to achieve reductions in size and weight of the distance measuring device 201. The distance measuring device 201 is the same in operation as the distance measuring device 1. Further, as in the case of the distance measuring device 2 according to Embodiment 2, the light source module 210 of the distance measuring device 201 may include an adjuster 15.

### (Other Embodiments)

While the foregoing has described a distance measuring device according to one or more aspects with reference to embodiments, the present disclosure is not intended to be limited to these embodiments. Applications to the embodiments of various modifications conceived of by persons skilled in the art and embodiments constructed by combining constituent elements in different embodiments are encompassed in the scope of the present disclosure without departing from the spirit of the present disclosure.

For example, although the foregoing embodiments and modifications have illustrated an example in which the processing circuit 53 calculates the absolute distance from the distance measuring device to the physical object 90, this is not intended to impose any limitation. The processing circuit 53 may calculate the first distance and the second distance and then output them to another device. For example, the processing circuit 53 may send the first distance and the second distance to another computer and cause the absolute distance to be calculated by the computer. Alternatively, the processing circuit 53 may send the first distance and the second distance to a display that then displays the first distance and the second distance or may output them to a printer that then prints them on a medium such as a sheet of paper. This makes it possible to present the first distance and the second distance to a user or other persons, thus allowing the user to calculate the absolute distance by hand calculation. Thus, the processing circuit 53 does not need to calculate the absolute distance.

Further, it may be possible to change the wavelength of at least either of the two single-wavelength laser beams. For example, the wavelength of one of the laser beams that more fluctuates in wavelength than the other may be swept. This makes it possible to change combinations of two wavelengths, thus making it possible to achieve a length measurement range and length measurement accuracy suited to the physical object 90. Further, the size of the device can be made smaller than in a case where three or more laser light sources are provided.

Further, one single-wavelength laser beam may be divided into two laser beams one of which is used as one of the two single-wavelength laser beams and the other of which is subjected to a frequency shift and used as the other of the two single-wavelength laser beams. A usable example of a way of making a frequency shift is an acousto-optic modulator (AOM).

Further, the first laser beam emitted by the measurative light source 11 may be a laser beam including a plurality of single modes. For example, the first laser beam may be an optical frequency comb laser beam. The optical frequency comb laser beam is a laser beam whose spectrum is discrete and constituted by frequency lines arranged at regular intervals.

Further, the fluctuation in wavelength does not need to be the standard deviation σ. For example, the fluctuation in wavelength may be 3σ. Alternatively, the fluctuation in wavelength may be a variance σ² of the frequency of a laser beam within a finite length of time. Further, the fluctuation in wavelength may be the difference between the maximum and minimum values of the wavelength of a laser beam within a finite length of time.

Further, in a case where the light source module includes three or more laser light sources, two of the laser light sources may emit single-wavelength laser beams of the same wavelength. Further, fluctuations in the wavelengths of the two single-wavelength laser beams of the same wavelength may be the same. The first measurement may involve the use of one of the two single-wavelength laser beams of the same wavelength, and the second measurement may involve the use of the other of the two single-wavelength laser beams of the same wavelength. In other words, first single-wavelength laser beams used separately in each of the first and second measurements may be laser beams emitted from different laser light sources.

Further, the length measurement accuracy Am of the second measurement may be greater than the length measurement range Rs of the first measurement. In a case where the difference between the length measurement accuracy Am of the second measurement and the length measurement range Rs of the first measurement is so slight as to be Am > Rs, it becomes possible to measure the distance with substantially the same degree of accuracy as in the case where Am ≤ Rs.

Further, for example, the wavelength information may be information indicating not the peak wavelength of a laser beam but the spectrum of a laser beam.

Further, general or specific aspects of the present disclosure may be implemented as a system, an apparatus, a method, an integrated circuit, or a computer program. Alternatively, general or specific aspects of the present disclosure may be implemented as a computer-readable non-transitory storage medium such as an optical disk, an HDD, or a semiconductor memory having the computer program stored thereon. Further, general or specific aspects of the present disclosure may be implemented as any selective combination of a system, an apparatus, a method, an integrated circuit, a computer program, and a storage medium.

Further, each of the foregoing embodiments can be subjected to various alterations, substitutions, additions, omissions, or other changes within the scope of the claims or the scope of equivalents thereof.

### Industrial Applicability

The present disclosure is applicable as a distance measuring device that can reduce deterioration in length measurement accuracy and long-term stability and, for example, is applicable to a surface shape inspecting device or other devices.

### Reference Signs List

1, 2, 3, 201 distance measuring device
10, 10A, 110, 210 light source module
11, 111 measurative light source
12 referential light source
13a, 13b,13c,13r laser light source
14 wavelength beam combining system
15 adjuster
20 optical brancher
30 referential interference system
31, 41, 60 light interference system
32, 42 photodetection system
33, 43 beam splitter
34, 35, 44, 46 mirror
36 moving mirror
36a, 36b reflective surface
37, 38, 47, 48 photodetector
40 measurative interference system
45 dichroic mirror
50 signal processing system
51 signal receiver
52 memory
53 processing circuit
90, 90a, 90b, 90c physical object

## Claims

1. A distance measuring device comprising:
a light source module that emits a first laser beam and a reference laser beam;
a referential interference system that detects a first interfering beam produced by subjecting the first laser beam to interference and a second interfering beam produced by subjecting the reference laser beam to interference and outputs a first signal;
a measurative interference system that receives a first reflected beam produced by the first laser beam being reflected by a physical object and outputs a second signal; and
a signal processing system that generates wavelength information pertaining to a wavelength of the first laser beam on the basis of the first signal and calculates a distance from the distance measuring device to the physical object on the basis of the wavelength information and the second signal,
wherein in the referential interference system, an optical path of the first laser beam and an optical path of the reference laser beam are arranged so that the first laser beam and the reference laser beam do not interfere with each other.

2. The distance measuring device according to claim 1, wherein
the light source module further emits a second laser beam that is different in wavelength from the first laser beam, and
the measurative interference system further receives a second reflected beam produced by the second laser beam being reflected by the physical object.

3. The distance measuring device according to claim 2, wherein a wavelength of the reference laser beam is shorter than a wavelength of the first laser beam.

4. The distance measuring device according to claim 2, wherein the measurative interference system includes
a first light interference system that subjects the first laser beam and the first reflected beam to interference with each other and emits a third interfering beam produced by an interference of the first laser beam and the first reflected beam and that subjects the second laser beam and the second reflected beam to interference with each other and emits a fourth interfering beam produced by an interference of the second laser beam and the second reflected beam, and
a first photodetection system that detects the third interfering beam and the fourth interfering beam and outputs the second signal.

5. The distance measuring device according to claim 1, wherein
the light source module further emits a plurality of second laser beams,
the plurality of second laser beams are different in wavelength from each other,
a wavelength of each of the plurality of second laser beams is different from a wavelength of the first laser beam, and
the measurative interference system further receives a plurality of second reflected beams produced by the plurality of second laser beams being reflected by the physical object.

6. The distance measuring device according to claim 1, further comprising an optical brancher that divides the first laser beam emitted from the light source module into a first portion and a second portion, causes the first portion to be incident on the referential interference system, and causes the second portion to be incident on the measurative interference system.

7. The distance measuring device according to claim 1, wherein the referential interference system includes
a second light interference system that subjects the first laser beam to interference and emits the first interfering beam produced by an interference of the first laser beam and that subjects the reference laser beam to interference and emits the second interfering beam produced by an interference of the reference laser beam, and
a second photodetection system that detects the first interfering beam and the second interfering beam and outputs the first signal.

8. The distance measuring device according to claim 7, wherein the referential interference system further includes an optical path difference changing mechanism that changes a difference between an optical path length of the first laser beam passing through the second light interference system and an optical path length of the reference laser beam passing through the second light interference system.

9. The distance measuring device according to any one of claims 1 to 8, wherein the signal processing system calculates a peak wavelength of the first laser beam on the basis of the first signal and thereby generates the wavelength information indicating the peak wavelength.

10. The distance measuring device according to any one of claims 2 to 4, wherein the signal processing system calculates a peak wavelength of the first laser beam and a peak wavelength of the second laser beam on the basis of the first signal and thereby generates the wavelength information indicating the peak wavelength of the first laser beam and the peak wavelength of the second laser beam.

11. The distance measuring device according to any one of claims 1 to 8, wherein the signal processing system updates the wavelength information in a case where a predetermined condition is satisfied.

12. The distance measuring device according to any one of claims 1 to 8, wherein
the signal processing system includes a memory for storing the wavelength information thus generated,
a frequency at which the signal processing system generates the wavelength information is lower than a frequency at which the signal processing system calculates the distance, and
the signal processing system calculates the distance on the basis of the wavelength information stored in the memory and the second signal.

13. The distance measuring device according to claim 12, wherein in a case where a fluctuation in the wavelength of the first laser beam exceeds a threshold, the signal processing system generates the wavelength information and updates the wavelength information stored in the memory.

14. The distance measuring device according to any one of claims 1 to 8, wherein the light source module includes an adjuster that adjusts the wavelength of the first laser beam on the basis of the wavelength information.

15. The distance measuring device according to any one of claims 1 to 8, wherein the first laser beam is a laser beam including a plurality of single modes.

16. The distance measuring device according to any one of claims 1 to 8, wherein the referential interference system and the measurative interference system share a light interference system.

17. The distance measuring device according to claim 1, wherein the measurative interference system further receives a third reflected beam produced by the reference laser beam being reflected by the physical object.
